(19) Europäisches Patentamt
European Patent Office
Office européen des brevets

(11) **EP 4 303 818 A1**

(12) **EUROPEAN PATENT APPLICATION**
published in accordance with Art. 153(4) EPC

(43) Date of publication:
**10.01.2024  Bulletin 2024/02**

(21) Application number: **22783910.7**

(22) Date of filing: **29.03.2022**

(51) International Patent Classification (IPC):
***G06T 9/00*** *(2006.01)*

(52) Cooperative Patent Classification (CPC):
**G06T 9/00**

(86) International application number:
**PCT/CN2022/083614**

(87) International publication number:
**WO 2022/213843 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.04.2021  RU 2021109673**

(71) Applicant: **Huawei Technologies Co., Ltd.**
**Longgang**
**Shenzhen, Guangdong 518129 (CN)**

(72) Inventors:
• **ZHAO, Yin**
  **Shenzhen, Guangdong 518129 (CN)**
• **KHAMIDULLIN, Viacheslav**
  **Shenzhen, Guangdong 518129 (CN)**
• **YANG, Haitao**
  **Shenzhen, Guangdong 518129 (CN)**

(74) Representative: **Thun, Clemens**
  **Mitscherlich PartmbB**
  **Patent- und Rechtsanwälte**
  **Karlstraße 7**
  **80333 München (DE)**

(54) **IMAGE PROCESSING METHOD AND APPARATUS, AND TRAINING METHOD AND APPARATUS**

(57)    This application relates to the field of image processing and provides an image processing method, a training method, and an apparatus. The image processing method includes: A sending node obtains a to-be-processed image, performs feature extraction on the to-be-processed image by using a feature extraction layer included in a convolutional neural network, to obtain a first feature map, and compresses the first feature map by using a feature compression layer included in the convolutional neural network, to obtain a second feature map, where a channel quantity of the second feature map is less than a channel quantity of the first feature map; and the sending node sends the second feature map to a receiving node. The first feature map of the to-be-processed image is obtained through extraction by using the feature extraction layer, and the first feature map is compressed by using the feature compression layer, to obtain the second feature map. Therefore, the channel quantity of the second feature map is less than the channel quantity of the first feature map, and when a resolution of the first feature map is not increased, a data amount of the second feature map is less than a data amount of the first feature map. This reduces a data amount of a feature map sent by the sending node to the receiving node, and reduces a delay of transmission between a terminal-side device and a cloud-side device.

FIG. 2

## Description

This application claims priority to Russian Patent Application No. 2021109673, filed with the Russian Patent Office on April 8, 2021 and entitled "IMAGE PROCESSING METHOD, TRAINING METHOD, AND APPARATUS", which is incorporated herein by reference in its entirety.

## TECHNICAL FIELD

This application relates to the field of image processing, and in particular, to an image processing method, a training method, and an apparatus.

## BACKGROUND

Images are a visual basis for human beings to perceive the world. Human beings can use the images to obtain, express, and convey information. To quickly obtain image information, a neural network may be used to process an image, to implement functions such as image classification, facial recognition, and target detection. Generally, a terminal-side device sends image data to a cloud-side device on which a neural network is deployed, and the cloud-side device performs image processing. However, a large amount of the image data causes a high delay of interaction between the terminal-side device and the cloud-side device.

In a current technical solution, a terminal-cloud synergy solution based on feature map transmission is provided. The terminal-side device extracts an original feature map of a to-be-processed image, and extracts a plurality of principal components of the original feature map by using a principal component analysis (principal component analysis, PCA) method. The terminal-side device sends a linear combination of the plurality of principal components to the cloud-side device. The cloud-side device obtains a reconstructed feature map based on the plurality of principal components, and obtains an image processing result based on the reconstructed feature map. However, there is still an excessively large data amount of the plurality of principal components. Consequently, it takes a long time for the cloud-side device to receive the plurality of principal components.

Therefore, how to reduce an amount of data transmitted between a terminal-side device and a cloud-side device during image processing is a problem needing to be urgently resolved currently.

## SUMMARY

This application provides an image processing method, a training method, and an apparatus, to resolve a problem that there is a large amount of data transmitted during image processing.

To achieve the foregoing objective, the following technical solutions are used in this application.

According to a first aspect, this application provides an image processing method. The method may be applied to a sending node, or may be applied to a communications apparatus that can support a terminal device in implementing the method. For example, the communications apparatus includes a chip system. The method includes: A sending node obtains a to-be-processed image, inputs the to-be-processed image into a convolutional neural network, performs feature extraction on the to-be-processed image by using a feature extraction layer included in the convolutional neural network, to obtain a first feature map, and compresses the first feature map by using a feature compression layer included in the convolutional neural network, to obtain a second feature map, where a channel quantity of the second feature map is less than a channel quantity of the first feature map. Further, the sending node sends the second feature map to a receiving node. Because the feature extraction is performed on the to-be-processed image by using the feature extraction layer, to obtain the first feature map, a data amount of the first feature map is less than a data amount of the to-be-processed image. In addition, the first feature map is compressed by using the feature compression layer, to obtain the second feature map, so that the channel quantity of the second feature map is less than the channel quantity of the first feature map. Therefore, when a resolution of the first feature map is not increased, a data amount of the second feature map is less than the data amount of the first feature map. This further reduces a data amount of a feature map sent by the sending node to the receiving node, and reduces a delay of transmission between a terminal-side device and a cloud-side device.

In a possible example, a resolution of the first feature map is $W \times H$, a resolution of the second feature map is $W' \times H'$, and $W' \times H' < W \times H$. A data amount of a feature map is determined by a product of a resolution and a channel quantity. For example, when the resolution of the second feature map is less than the resolution of the first feature map, because the channel quantity of the second feature map is less than the channel quantity of the first feature map, the data amount of the second feature map is less than the data amount of the first feature map. This reduces a data amount of a feature map sent by the sending node to the receiving node, and reduces a delay of transmission between a terminal-side device and a cloud-side device.

In a possible implementation, the feature compression layer includes at least one convolutional layer. For example, the convolutional layer may be used to perform downsampling on the first feature map, to reduce the resolution of the first feature map. For another example, the convolutional layer may further be used to reduce the channel quantity of the first feature map, to obtain the second feature map.

In another possible implementation, the method further includes: The sending node receives an image processing result of the to-be-processed image. The image processing result is determined by the receiving node based on the second feature map. The sending node performs feature extraction and compression on the to-be-processed image, to obtain the second feature map, and the receiving node determines the image processing result of the to-be-processed image by using the second feature map. This implements terminal-cloud interaction in the image processing method, and overcomes a disadvantage of insufficient computing power or an insufficient storage capability of the sending node.

In another possible implementation, the method further includes: The sending node displays the image processing result. The to-be-processed image and the image processing result are displayed, helping a user obtain various information in the to-be-processed image, such as object classification, facial recognition, and target detection. This simplifies a process of manually obtaining image information, and improves efficiency of obtaining visual information.

According to a second aspect, this application provides an image processing method. The method may be applied to a receiving node, or may be applied to a communications apparatus that can support a terminal device in implementing the method. For example, the communications apparatus includes a chip system. The method includes: A receiving node receives a second feature map, and reconstructs the second feature map by using a feature reconstruction layer included in a convolutional neural network, to obtain a third feature map; the receiving node processes the third feature map by using a feature output layer and an image processing layer that are included in the convolutional neural network, to obtain an image processing result; and the receiving node further sends the image processing result, where the image processing result indicates information about a to-be-processed image. The second feature map is obtained after the sending node performs feature extraction on the to-be-processed image by using the convolutional neural network, to obtain the first feature map, and compresses the first feature map. A channel quantity of the second feature map is less than a channel quantity of the third feature map, and a channel quantity of the first feature map is the same as the channel quantity of the third feature map. In the image processing method provided in this application, the receiving node needs to determine the image processing result of the to-be-processed image based only on the second feature map sent by the sending node, and the channel quantity of the second feature map is less than the channel quantity of the third feature map required for image processing. Therefore, when a resolution of the second feature map is not increased, an amount of data transmitted by the sending node to the receiving node is reduced, and a delay of transmission between a terminal-side device and a cloud-side device is reduced.

In an optional implementation, the feature reconstruction layer includes at least one deconvolution layer. For example, the deconvolution layer may be used to perform upsampling on the second feature map, to improve the resolution of the second feature map. For another example, the deconvolution layer may further be used to increase the channel quantity of the second feature map, to obtain the third feature map.

In another optional implementation, a resolution of the second feature map is W'×H', a resolution of the third feature map is W×H, and W'×H'<W×H. A data amount of a feature map is determined by a product of a resolution and a channel quantity. For example, when the resolution of the second feature map is less than the resolution of the first feature map, because the channel quantity of the second feature map is less than the channel quantity of the first feature map, a data amount of the first feature map is less than a data amount of the second feature map.

In another optional implementation, that a receiving node receives a second feature map includes: The receiving node receives the second feature map sent by the sending node. That the receiving node sends the image processing result includes: The receiving node sends the image processing result to the sending node.

According to a third aspect, this application further provides a convolutional neural network training method. The training method may be applied to a communications apparatus that can support a terminal device in implementing the method. For example, the communications apparatus includes a chip system. The method includes: obtaining a training set including at least one training image; and training a first bottleneck structure layer in a first convolutional neural network based on the training set, and a first feature extraction layer and a first feature output layer in the first convolutional neural network, to obtain a second convolutional neural network. The second convolutional neural network includes the first feature extraction layer, a second bottleneck structure layer, and the first feature output layer. The first feature extraction layer is used to perform feature extraction on a to-be-processed image, to obtain a first feature map; a feature compression layer in the second bottleneck structure layer is used to compress the first feature map, to obtain a second feature map; and a channel quantity of the second feature map is less than a channel quantity of the first feature map. When the convolutional neural network is used to extract the feature map of the to-be-processed image, a resolution of the to-be-processed image is decreased or remains unchanged. The second convolutional neural network obtained by training the first convolutional neural network by using the training method provided in this application may be used to perform feature extraction and compression on the to-be-processed image. This reduces a channel quantity of the feature map of the to-be-processed image, and further reduces a data amount of the feature map sent by the sending node to the receiving node. In addition, because the first convolutional neural network and the second convolutional neural network have the same first feature extraction layer and the same first feature output layer, only a bottleneck structure layer needs to be trained in the training of the convolutional neural network. This reduces computing resources required for the training of the convolutional neural network.

In an optional implementation, the training a first bottleneck structure layer in a first convolutional neural network based on the training set, and a first feature extraction layer and a first feature output layer in the first convolutional neural network, to obtain a second convolutional neural network includes: inputting the training set into a third convolutional neural network, to obtain a first set; inputting the training set into the first convolutional neural network, to obtain a second set; calculating a loss function based on the fourth feature map in the first set and the fifth feature map in the second set; and updating a parameter of the first bottleneck structure layer according to the loss function, to obtain the second bottleneck structure layer and obtain the second convolutional neural network. The third convolutional neural network includes a second feature extraction layer and a second feature output layer, a parameter of the first feature extraction layer is the same as a parameter of the second feature extraction layer, and a parameter of the first feature output layer is the same as a parameter of the second feature output layer. A fourth feature map included in the first set is obtained after the second feature extraction layer and the second feature output layer are used to perform feature extraction on the training image, and a fifth feature map included in the second set is obtained after the first bottleneck structure layer and the first feature output layer are used to perform feature reconstruction and processing on the second feature map. According to the training method provided in this application, especially for a same training image, a loss function is calculated for a distance between a plurality of corresponding feature maps (the fourth feature map and the fifth feature map) in the first convolutional neural network and the third convolutional neural network, to obtain the second convolutional neural network. This helps reduce the distance between the fourth feature map and the fifth feature map as much as possible, thereby reducing an error between the first feature map and the third feature map, and improving image processing accuracy.

In another optional implementation, the inputting the training set into the first convolutional neural network, to obtain a second set includes: performing feature extraction on the training image by using the first feature extraction layer, to obtain the first feature map; compressing the first feature map by using a feature compression layer included in the first bottleneck structure layer, to obtain a sixth feature map; reconstructing the sixth feature map by using a feature reconstruction layer included in the first bottleneck structure layer, to obtain a third feature map; and processing the third feature map by using the second feature output layer, to obtain the fifth feature map included in the second set. A channel quantity of the third feature map is the same as a channel quantity of the first feature map, and a channel quantity of the sixth feature map is less than the channel quantity of the first feature map.

In another optional implementation, the calculating a loss function based on the fourth feature map in the first set and the fifth feature map in the second set includes: obtaining a first distance between the fourth feature map and the fifth feature map; obtaining a second distance between the first feature map and the third feature map; and calculating the loss function based on the first distance and the second distance. The loss function is calculated by using both the first distance between the fourth feature map and the fifth feature map and the second distance between the first feature map and the third feature map. This helps reduce the distance between the fourth feature map and the fifth feature map as much as possible, and reduces the distance between the first feature map and the third feature map as much as possible, thereby reducing a processing error between the feature compression layer and the feature reconstruction layer, and improving image processing accuracy.

In another optional implementation, a resolution of the first feature map is W×H, a resolution of the second feature map is W'×H', and W'×H'<W×H.

According to a fourth aspect, this application further provides an image processing apparatus. For beneficial effects, refer to descriptions in any one of the implementations of the first aspect. Details are not described herein again. The image processing apparatus has a function of implementing behavior in the method instance in any one of the implementations of the first aspect. The function may be implemented by hardware, or may be implemented by hardware by executing corresponding software. The hardware or the software includes one or more modules corresponding to the foregoing function. In a possible design, the image processing apparatus is applied to a sending node, and the image processing apparatus includes: a transceiver unit, configured to obtain a to-be-processed image; a feature extraction unit, configured to perform feature extraction on the to-be-processed image by using a feature extraction layer included in a convolutional neural network, to obtain a first feature map; and a feature compression unit, configured to compress the first feature map by using a feature compression layer included in the convolutional neural network, to obtain a second feature map, where a channel quantity of the second feature map is less than a channel quantity of the first feature map. The transceiver unit is further configured to send the second feature map to a receiving node.

In a possible implementation, the feature compression layer includes at least one convolutional layer.

In another possible implementation, a resolution of the first feature map is W×H, a resolution of the second feature map is W'×H', and W'×H'<W×H.

In another possible implementation, the transceiver unit is further configured to receive an image processing result of the to-be-processed image. The image processing result is determined by the receiving node based on the second feature map.

In another possible implementation, the image processing apparatus further includes a display unit, configured to display the to-be-processed image and/or the image processing result.

According to a fifth aspect, this application further provides another image processing apparatus. For beneficial effects, refer to descriptions in any one of the implementations of the second aspect. Details are not described herein again. The image processing apparatus has a function of implementing behavior in the method instance in any one of the implementations of the second aspect. The function may be implemented by hardware, or may be implemented by hardware by executing corresponding software. The hardware or the software includes one or more modules corresponding to the foregoing function. In a possible design, the image processing apparatus is applied to a receiving node, and the image processing apparatus includes: a transceiver unit, configured to receive a second feature map, where the second feature map is obtained after a sending node performs feature extraction on a to-be-processed image by using a convolutional neural network, to obtain a first feature map, and compresses the first feature map; a feature reconstruction unit, configured to reconstruct the second feature map by using a feature reconstruction layer included in the convolutional neural network, to obtain a third feature map, where a channel quantity of the second feature map is less than a channel quantity of the third feature map, and a channel quantity of the first feature map is the same as the channel quantity of the third feature map; and an image processing unit, configured to process the third feature map by using a feature output layer and an image processing layer that are included in the convolutional neural network, to obtain an image processing result, where the image processing result indicates information about the to-be-processed image. The transceiver unit is configured to send the image processing result.

In a possible implementation, the feature reconstruction layer includes at least one deconvolution layer.

In another possible implementation, a resolution of the second feature map is W'×H', a resolution of the third feature map is W×H, and W'×H'<W×H.

In another possible implementation, the transceiver unit is specifically configured to receive the second feature map sent by the sending node. The transceiver unit is specifically configured to send the image processing result to the sending node.

According to a sixth aspect, this application further provides a convolutional neural network training apparatus. For beneficial effects, refer to descriptions in any one of the implementations of the third aspect. Details are not described herein again. The image processing apparatus has a function of implementing behavior in the method instance in any one of the implementations of the third aspect. The function may be implemented by hardware, or may be implemented by hardware by executing corresponding software. The hardware or the software includes one or more modules corresponding to the foregoing function. In a possible design, the training apparatus includes: an obtaining unit, configured to obtain a training set, where the training set includes at least one training image; and a processing unit, configured to train a first bottleneck structure layer in a first convolutional neural network based on the training set, and a first feature extraction layer and a first feature output layer in the first convolutional neural network, to obtain a second convolutional neural network. The second convolutional neural network includes the first feature extraction layer, a second bottleneck structure layer, and the first feature output layer. The first feature extraction layer is used to perform feature extraction on a to-be-processed image, to obtain a first feature map; a feature compression layer in the second bottleneck structure layer is used to compress the first feature map, to obtain a second feature map; and a channel quantity of the second feature map is less than a channel quantity of the first feature map.

In a possible implementation, the processing unit includes: a first training unit, configured to input the training set into a third convolutional neural network to obtain a first set, where the third convolutional neural network includes a second feature extraction layer and a second feature output layer, a parameter of the first feature extraction layer is the same as a parameter of the second feature extraction layer, a parameter of the first feature output layer is the same as a parameter of the second feature output layer, the first set includes a fourth feature map, and the fourth feature map is obtained after the second feature extraction layer and the second feature output layer are used to perform feature extraction on the training image; a second training unit, configured to input the training set into the first convolutional neural network to obtain a second set, where the second set includes a fifth feature map, and the fifth feature map is obtained after the first bottleneck structure layer and the first feature output layer are used to perform feature reconstruction and processing on the second feature map; a loss calculation unit, configured to calculate a loss function based on the fourth feature map in the first set and the fifth feature map in the second set; and a third training unit, configured to update a parameter of the first bottleneck structure layer according to the loss function to obtain the second bottleneck structure layer, to obtain the second convolutional neural network.

In another possible implementation, the inputting the training set into the first convolutional neural network to obtain a second set includes: performing feature extraction on the training image by using the first feature extraction layer, to obtain the first feature map; compressing the first feature map by using a feature compression layer included in the first bottleneck structure layer, to obtain a sixth feature map, where a channel quantity of the sixth feature map is less than the channel quantity of the first feature map; reconstructing the sixth feature map by using a feature reconstruction layer included in the first bottleneck structure layer, to obtain a third feature map, where a channel quantity of the third feature map is the same as the channel quantity of the first feature map; and processing the third feature map by using the second feature output layer, to obtain the fifth feature map included in the second set.

In another possible implementation, the loss calculation unit is specifically configured to obtain a first distance between the fourth feature map and the fifth feature map. The loss calculation unit is specifically configured to obtain a second distance between the first feature map and the third feature map. The loss calculation unit is specifically configured to calculate the loss function based on the first distance and the second distance.

In another possible implementation, a resolution of the first feature map is W×H, a resolution of the second feature map is W'×H', and W'×H'<W×H.

According to a seventh aspect, this application further provides a communications apparatus, including a processor and an interface circuit. The interface circuit is configured to: receive a signal from a communications apparatus other than the communications apparatus and transmit the signal to the processor, or send a signal from the processor to a communications apparatus other than the communications apparatus, and the processor is configured to implement the operation steps of the method in any one of the first aspect and the possible implementations of the first aspect, any one of the second aspect and the possible implementations of the second aspect, or any one of the third aspect and the possible implementations of the third aspect by using a logic circuit or by executing code instructions.

According to an eighth aspect, this application provides a computer-readable storage medium. The storage medium stores a computer program or instructions. When the computer program or the instructions are executed by a communications apparatus, the operation steps of the method in any one of the first aspect and the possible implementations of the first aspect, any one of the second aspect and the possible implementations of the second aspect, or any one of the third aspect and the possible implementations of the third aspect are implemented.

According to a ninth aspect, this application provides a computer program product. When the computer program product is run on a computer, a computing device is enabled to implement the operation steps of the method in any one of the first aspect and the possible implementations of the first aspect, any one of the second aspect and the possible implementations of the second aspect, or any one of the third aspect and the possible implementations of the third aspect.

According to a tenth aspect, this application provides a chip, including a memory and a processor. The memory is configured to store computer instructions, and the processor is configured to invoke the computer instructions from the memory and run the computer instructions, to perform the operation steps of the method in any one of the first aspect and the possible implementations of the first aspect, any one of the second aspect and the possible implementations of the second aspect, or any one of the third aspect or the possible implementations of the third aspect.

In this application, according to the implementations of the foregoing aspects, the implementations may be further combined to provide more implementations.

## BRIEF DESCRIPTION OF DRAWINGS

FIG. 1 is a schematic diagram of a system of a terminal-cloud synergy solution according to this application;

FIG. 2 is a schematic flowchart of an image processing method according to this application;

FIG. 3 is a schematic diagram of a structure of a convolutional neural network according to this application;

FIG. 4 is a schematic diagram of a structure of a convolutional neural network in a conventional technology;

FIG. 5 is a schematic diagram of a display of image processing according to this application;

FIG. 6 is a schematic flowchart of a training method according to this application;

FIG. 7 is a schematic diagram 1 of training of a convolutional neural network according to this application;

FIG. 8A is a schematic diagram 2 of training of a convolutional neural network according to this application;

FIG. 8B is a schematic diagram 3 of training of a convolutional neural network according to this application;

FIG. 9 is a schematic flowchart of another training method according to this application;

FIG. 10 is a schematic diagram of a structure of a training apparatus and an image processing apparatus according to this application; and

FIG. 11 is a schematic diagram of a structure of a communications apparatus according to this application.

## DESCRIPTION OF EMBODIMENTS

In this specification, the claims, and the accompanying drawings of this application, the terms "first", "second", "third", and the like are intended to distinguish between different objects but do not limit a particular order.

In addition, in embodiments of this application, the word such as "example" or "for example" is used to represent an example, an illustration, or a description. Any embodiment or design scheme described as an "example" or "for example" in embodiments of this application should not be explained as being more superior or having more advantages than another embodiment or design scheme. Exactly, use of the word such as "example" or "for example" is intended to present a relative concept in a specific manner.

For clear and brief description of the following embodiments, a related technology is first briefly described.

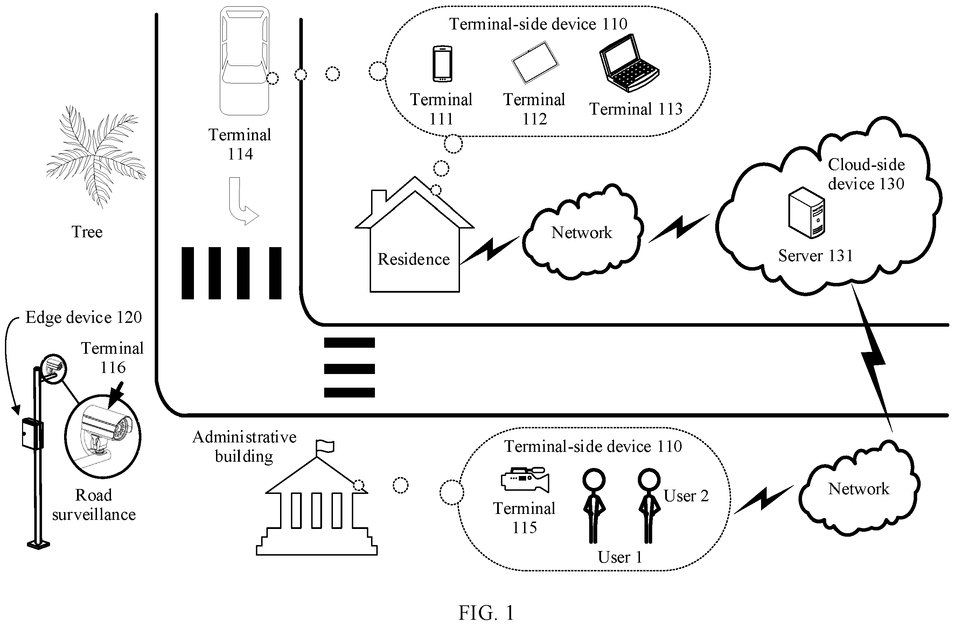

FIG. 1 is a schematic diagram of a system of a terminal-cloud synergy solution according to this application. The system includes a terminal-side device 110, an edge device 120, and a cloud-side device 130. The terminal-side device 110 may be in a wireless or wired connection to the edge device 120. The terminal-side device 110 may be in a wireless or wired connection to the cloud-side device 130. The edge device 120 may be in a wireless or wired connection to the cloud-side device 130. For example, the terminal-side device 110, the edge device 120, and the cloud-side device 130 may communicate with each other over a network, and the network may be the internet.

The terminal-side device 110 may be a terminal device, user equipment (user equipment, UE), a mobile station (mobile station, MS), a mobile terminal (mobile terminal, MT), or the like. The terminal-side device 110 may be a mobile phone (for example, a terminal 111 shown in FIG. 1), a tablet computer (for example, a terminal 112 shown in FIG. 1), a computer with a wireless transceiver function (for example, a terminal 113 shown in FIG. 1), a virtual reality (Virtual Reality, VR) terminal device, an augmented reality (Augmented Reality, AR) terminal device, a wireless terminal in industrial control (industrial control), a wireless terminal in self-driving (self-driving) (for example, a terminal 114 shown in FIG. 1), a wireless terminal in a smart grid (smart grid), a wireless terminal in transportation safety (transportation safety), a wireless terminal in a smart city (smart city) (for example, a terminal 115 and a terminal 116 shown in FIG. 1), a wireless terminal in a smart home (smart home), or the like. For example, the terminal 114 may be an image processing apparatus in a self-driving system, the terminal 115 may be a photographing apparatus used for road surveillance, and the terminal 116 may be a collection apparatus (for example, a camera) used for facial recognition. A specific technology and a specific device form that are used by the terminal-side device are not limited in embodiments of this application.

If computing power or a storage capability of the terminal-side device 110 is relatively strong, the terminal-side device 110 may perform image processing on a to-be-processed image by using an artificial intelligence (artificial intelligence, AI) neural network. The to-be-processed image may be collected by the terminal-side device 110, or may be implemented by an image collection device that is in a communication connection to the terminal-side device 110. The image collection device may be a video camera, a camera, or the like. For example, the to-be-processed image may be an image collected by the camera, or may be a frame of an image in a video collected by the video camera.

If computing power or a storage capability of the terminal-side device 110 is insufficient, a complex AI neural network cannot be run to perform image processing.

In a possible implementation, the terminal-side device 110 may transmit an image to the edge device 120 or the cloud-side device 130, and the edge device 120 or the cloud-side device 130 runs an AI neural network to process the image, to obtain an image processing result. For example, the terminal 116 for road surveillance captures a road image when the terminal 114 (for example, a car or a truck) passes through an intersection, and sends the road image to the edge device 120. The edge device 120 runs the AI neural network to determine whether a license plate of the terminal 114 is a local license plate. If the license plate of the terminal 114 is a non-local license plate, the edge device 120 sends information about the license plate and an image of the terminal 114 to a terminal device for traffic management.

In another possible implementation, the terminal-side device 110 may transmit an image to the edge device 120. The edge device 120 preprocesses the image, and sends a result obtained through preprocessing to the cloud-side device 130. The cloud-side device 130 obtains the image processing result. For example, an AI neural network is divided into two parts: a first part network that is used to extract an original feature map (feature map) of an image, and a second part network that is used to obtain an image processing result based on the original feature map. For example, the edge device 120 runs the first part network and sends the original feature map of the image to the cloud-side device 130, and the cloud-side device 130 runs the second part network to process the original feature map, to obtain the image processing result.

The cloud-side device 130 may be a server configured to process image data, for example, a server 131 shown in FIG. 1. Alternatively, the cloud-side device 130 may be a plurality of virtual machines provided by the server 131 by using a virtualization technology, and the virtual machines perform image processing.

FIG. 1 is merely a schematic diagram. The system may further include another device that is not shown in FIG. 1. Quantities of terminal-side devices, edge devices, and cloud-side devices included in the system are not limited in embodiments of this application.

However, there are large data amounts of the image and the original feature map that are transmitted to the edge device or the cloud-side device. Consequently, a delay of sending data by the terminal-side device to the cloud-side device is high. To resolve the foregoing problem, this application provides an image processing method. The method includes: A sending node obtains a to-be-processed image, inputs the to-be-processed image into a convolutional neural network, performs feature extraction on the to-be-processed image by using a feature extraction layer included in the convolutional neural network, to obtain a first feature map, and compresses the first feature map by using a feature compression layer included in the convolutional neural network, to obtain a second feature map. A channel quantity of the second feature map is less than a channel quantity of the first feature map. Further, the sending node sends the second feature map to a receiving node. Because the feature extraction is performed on the to-be-processed image by using the feature extraction layer, to obtain the first feature map, a data amount of the first feature map is less than a data amount of the to-be-processed image. In addition, the first feature map is compressed by using the feature compression layer, to obtain the second feature map, so that the channel quantity of the second feature map is less than the channel quantity of the first feature map. Therefore, when a resolution of the first feature map is not increased, a data amount of the second feature map is less than the data amount of the first feature map. This further reduces a data amount of a feature map sent by the sending node to the receiving node, and reduces a delay of transmission between a terminal-side device and a cloud-side device.

The following describes implementations of embodiments of this application in detail with reference to accompanying drawings.

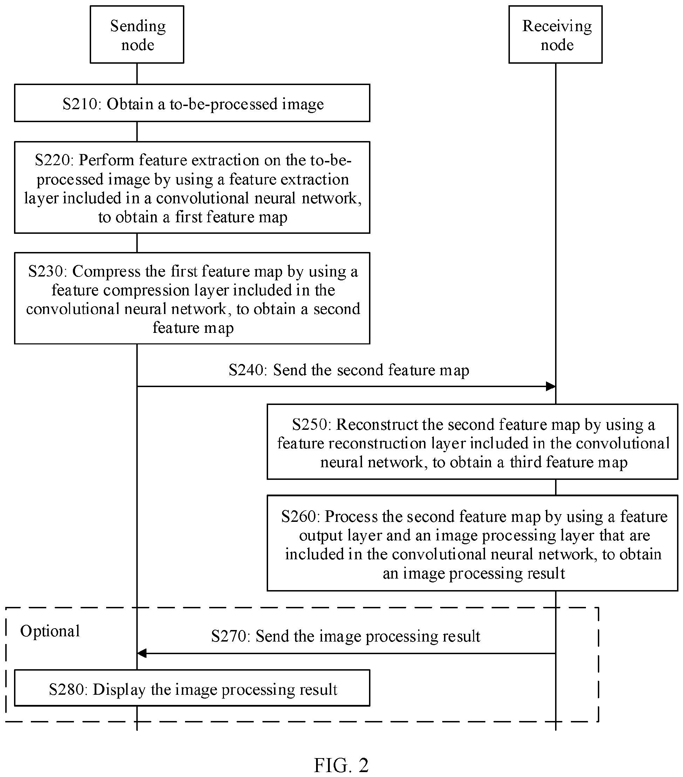

Descriptions are provided herein by using an example in which a sending node may implement a function and/or functions of the terminal-side device and/or the edge device shown in FIG. 1, and a receiving node may implement a function of the cloud-side device shown in FIG. 1. FIG. 2 is a schematic flowchart of an image processing method according to this application. The image processing method includes the following steps.

S210: A sending node obtains a to-be-processed image.

The to-be-processed image may include at least one of a binary image, a grayscale image, an index image, or a true-color image.

In a possible case, the to-be-processed image may be collected by the sending node. As shown in FIG. 1, if the sending node is any one of the terminal 111 to the terminal 116, the sending node may collect an image by using an image collection unit (for example, a camera) pre-installed on the sending node.

In another possible case, the to-be-processed image may alternatively be collected by an image collection apparatus that is in a communication connection to the sending node. As shown in FIG. 1, the image collection apparatus may be the terminal 115 or the terminal 116, and the sending node may be a server connected to the terminal 115 or the terminal 116, or the like.

S220: The sending node performs feature extraction on the to-be-processed image by using a feature extraction layer included in a convolutional neural network, to obtain a first feature map.

The convolutional neural network (convolutional neuron network, CNN) is a deep neural network with a convolutional structure, and a deep learning (deep learning) architecture. In the deep learning architecture, multi-layer learning is performed at different abstract levels according to a machine learning algorithm. As a deep learning architecture, the CNN is a feedforward (feedforward) artificial neural network, and neurons in the feedforward artificial neural network may respond to an input image. The convolutional neural network includes a feature extractor constituted by a convolutional layer and a pooling layer. The feature extractor may be considered as a filter. A convolution process may be considered as using a trainable filter to perform convolution on an input image or a convolutional feature map (feature map).

For example, the convolutional layer is a neuron layer that is in the convolutional neural network and that is used to perform convolution processing on an input signal. The convolutional layer may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix is usually used to process pixels at a granularity level of one pixel (or two pixels, depending on a value of a stride (stride)) in a horizontal direction on the input image, to extract a specific feature from the image. Different weight matrices may be used to extract different features from the image. For example, one weight matrix is used to extract edge information of the image, another weight matrix is used to extract a specific color of the image, and a further weight matrix is used to blur unnecessary noise in the image. The plurality of weight matrices have a same size (rows x columns), and feature maps extracted from the plurality of weight matrices with the same size have a same size. Then, the plurality of extracted feature maps with the same size are combined to form an output of the convolution operation. Weight values in these weight matrices need to be obtained through a large amount of training in actual application. Each weight matrix including weight values obtained through training may be used to extract information from an input image, so that the convolutional neural network performs correct prediction. When the convolutional neural network has a plurality of convolutional layers, a large quantity of general features are usually extracted from an original convolutional layer. The general feature may also be referred to as a low-level feature. As a depth of the convolutional neural network increases, a feature extracted from a subsequent convolutional layer is more complex, for example, a high-level semantic feature. A feature with higher-level semantics is more applicable to a to-be-resolved problem.

The convolutional neural network includes at least one convolutional layer (convolutional layer). The convolutional layer includes at least one convolution unit.

The convolutional layer may be used to extract various feature maps of the to-be-processed image. The feature map is three-dimensional data that is output by a layer, such as a convolutional layer, an activation layer, a pooling layer, or a batch normalization layer in the convolutional neural network, and three dimensions of the feature map are: height (height, H), width (width, W), and channel quantity (channel, C). A product of W and H may be referred to as a resolution (W×H) of the feature map. The feature map may represent various information of the to-be-processed image, such as edge information, a line, and a texture in the image.

For example, a resolution of the to-be-processed image is 96×96, and the to-be-processed image is split into 144 8×8 image samples. The feature extraction layer is used to perform convolution on all the 8×8 image samples, and aggregate all results obtained through convolution, to obtain the first feature map of the to-be-processed image.

In some possible examples, the convolutional neural network may further include an activation layer, such as a rectified linear unit layer (rectified linear units layer, ReLU) or a parametric rectified linear unit (parametric rectified linear unit, PReLU).

In some other possible examples, the convolutional neural network may further include other functional modules such as a pooling layer (pooling layer), a batch normalization layer (BN layer), and a fully connected layer (fully connected layer). For a related principle of each functional module of the CNN, refer to related descriptions in a conventional technology. Details are not described again.

S230: The sending node compresses the first feature map by using a feature compression layer included in the convolutional neural network, to obtain a second feature map.

In this specification, a dimension of the first feature map is denoted as $W_1 \times H_1 \times C_1$, and a dimension of the second feature map is denoted as $W_2 \times H_2 \times C_2$.

The feature compression layer includes at least one convolutional layer. The convolutional layer is used to reduce a channel quantity of the first feature map, and a channel quantity of the second feature map is less than the channel quantity of the first feature map. For example, a quantity of input channels of the convolutional layer is $C_{in1}$, where $C_{in1}=C_1$, and a quantity of output channels is $C_{out1}$, where $C_{out1}=C_2$, and $C_{in1}>C_{out1}$. For example, the quantity of output channels is 1/K of the quantity of input channels, and K may be 2, 3, 4, 6, 8, 12, 16, or the like.

In a possible example, the convolutional layer may be further used to perform downsampling on the first feature map. For example, a stride (stride) of the convolutional layer is denoted as 2, and downsampling is performed on the first feature map to obtain the second feature map, where $W_1=2W_2$, $H_1=2H_2$, and $C_1=2C_2$.

In an optional implementation, a convolutional kernel of the convolutional layer may be determined based on actual computing power and an image processing requirement of the sending node. For example, the convolutional kernel of the convolutional layer may be 3×3, 5×5, 7×7, or the like.

In a current technical solution, a pooling layer is usually used for data dimensionality reduction of a feature map in a neural network. A pooling operation of the pooling layer mainly reduces a parameter of the feature map by using a pooling kernel, such as maximum value pooling, mean value pooling, and minimum value pooling. However, in a process of reducing a total data amount of the feature map by using the pooling layer, channel data of the feature map increases. For example, in a VGG (Visual Geometry Group Network) model in the CNN, a VGG network includes a convolutional-layer module and a fully connected-layer module. The VGG network is connected to several vgg_blocks in series, and a hyperparameter of the VGG network is defined by a variable conv_rach. This variable specifies a quantity of output channels of each VGG block in the VGG network. In a process of performing data dimensionality reduction on the feature map by using the VGG block, a height and a width of an original feature map are halved, and a channel quantity of the original feature map is doubled. In this case, although the total data amount of the feature map is reduced, after the feature map is transmitted to the cloud-side device, because the channel quantity increases and the resolution decreases, image information corresponding to each channel in the feature map is reduced, and a large amount of image information is lost in a reconstructed feature map obtained by the cloud-side device through reconstruction. Consequently, there is a large difference between an image processing result and information actually indicated by the to-be-processed image.

However, in the data processing method provided in this embodiment of this application, the sending node compresses the first feature map by using the feature compression layer included in the convolutional neural network, to obtain the second feature map, and a main difference between the first feature map and the second feature map lies in that the channel quantity of the second feature map is less than the channel quantity of the first feature map. When a resolution of the second feature map is less than a resolution of the first feature map (for example, $C_1/C_2=W_1/W_2=H_1/H_2$), image information corresponding to each channel in the second feature map remains unchanged, and lost image information of a reconstructed feature map obtained after a receiving node reconstructs the second feature map is reduced. When a resolution of the first feature map is the same as a resolution of the second feature map, image information corresponding to each channel in the second feature map increases, lost image information of a reconstructed feature map obtained after a receiving node reconstructs the second feature map is reduced, and a difference between an image processing result obtained by the receiving node based on the second feature map and information actually indicated by the to-be-processed image is reduced.

S240: The sending node sends the second feature map to the receiving node.

In an optional implementation, when the sending node sends the second feature map to the receiving node, the sending node may first encode the second feature map to obtain a bitstream, and send the bitstream to the receiving node. For example, a method for coding may be a lossless coding method, for example, an LZMA algorithm (lempel-ziv-markov chain-algorithm). For another example, a method for coding may alternatively be a lossy coding method, for example, a joint photographic experts group (joint photographic experts group, JPEG) coding method, an advanced video coding (advanced video coding, AVC) method, a high efficiency video coding (high efficiency video coding, HEVC) method, or another image coding method. For another example, a method for coding may alternatively be an entropy coding method based on a convolutional neural network and arithmetic coding, for example, an entropy coding method oriented to a variational autoencoder (variation autoencoder, VAE) feature map.

In an example, the sending node may round the second feature map to 8-bit data, combine data of each channel in a YUV400 format, and input the data into an HEVC encoder or a VVC encoder.

In another example, the sending node may further round the second feature map to N-bit data, and then compress the N-bit data by using a lossless coding algorithm.

In another example, the sending node may further perform compression by using an encoder designed for feature map data.

Alternatively, the sending node may not encode the second feature map. For example, the sending node sends, to the receiving node, the second feature map that is output by the feature compression layer.

In a possible case, interaction between the sending node and the receiving node may be performed through data transmission by using the network shown in FIG. 1. For example, transmission may be performed between the sending node and the receiving node by using a transmission control protocol (transmission control protocol, TCP), an internet protocol (Internet Protocol, IP), a TCP/IP, or the like.

S250: The receiving node reconstructs the second feature map by using a feature reconstruction layer included in the convolutional neural network, to obtain a third feature map.

In this embodiment of this application, the second feature map is obtained after the sending node performs feature extraction and compression on the to-be-processed image by using the feature extraction layer and the feature compression layer that are included in the convolutional neural network. However, in some possible examples, the second feature map may alternatively be forwarded by a network device that communicates with the sending node after another processing device performs feature extraction and compression on the to-be-processed image. For example, the processing device may be a mobile phone, and the network device may be a router.

In this specification, a dimension of the third feature map is denoted as $W_3 \times H_3 \times C_3$.

The feature reconstruction layer may include at least one deconvolution layer (deconvolution layer). The deconvolution layer is used to increase the channel quantity of the second feature map, so that $C_2 < C_3$, and $C_3 = C_1$. For example, a quantity of input channels of the deconvolution layer is $C_{in2}$, where $C_{in2} = C_2$, and a quantity of output channels is $C_{out2}$, where $C_{out2} = C_3$, and $C_{in2} < C_{out2}$. For example, the quantity of output channels may be K times of the quantity of input channels, and K may be 2, 3, 4, 6, 8, 12, 16, or the like.

In a possible example, the deconvolution layer may be further used to perform upsampling on the second feature map. For example, a stride of the deconvolution layer is denoted as 2, and upsampling is performed on the second feature map to obtain the third feature map, where $W_3 = 2W_2 = W_1$, and $C_3 = 2C_2 = C_1$.

In an optional implementation, a convolutional kernel of the deconvolution layer may be determined based on actual computing power and an image processing requirement of the receiving node. For example, the convolutional kernel of the deconvolution layer may be $3 \times 3$, $5 \times 5$, $7 \times 7$, or the like.

In a possible design, if the second feature map is transmitted in a bitstream, the receiving node may further decode the bitstream, and a manner of decoding the bitstream by the receiving node matches a manner of encoding the second feature map by the sending node.

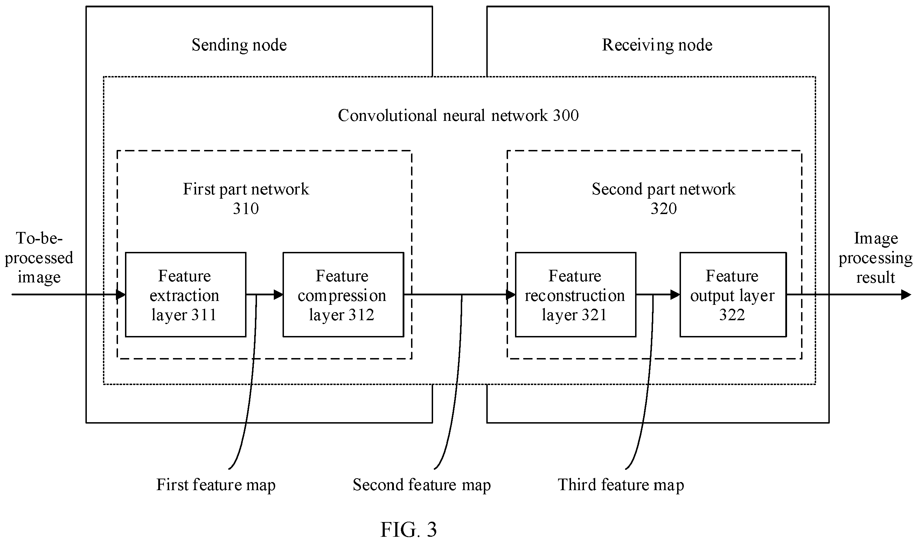

FIG. 3 is a schematic diagram of a structure of a convolutional neural network according to this application. The convolutional neural network 300 includes a first part network 310 and a second part network 320. A sending node may obtain a second feature map of a to-be-processed image by using the first part network 310, and a receiving node may process the second feature map by using the second part network 320, to obtain an image processing result.

The first part network 310 includes a feature extraction layer 311 and a feature compression layer 312, and the second part network 320 includes a feature reconstruction layer 321 and a feature output layer 322.

For the feature compression layer 312 and the feature reconstruction layer 321, this application further provides the following possible implementations.

In a first possible case, the feature compression layer 312 includes two convolutional layers, a first convolutional layer is used to implement downsampling on a first feature map, and a second convolutional layer is used to reduce a channel quantity of the first feature map, to obtain the second feature map. For example, a quantity of input channels of the first convolutional layer is denoted as $C_{in}$, a stride is 2, and a quantity of output channels

$C_{out1}=C_{in1}$. An input feature map of the second convolutional layer is an output feature map of the first convolutional layer, a stride is 1, and a quantity of output channels $C_{out2}<C_{in}$. Correspondingly, the feature reconstruction layer 321 includes one convolutional layer and one deconvolution layer. The convolutional layer is used to increase a channel quantity of the second feature map, and then the deconvolution layer is used to implement upsampling on the second feature map, to obtain the third feature map. For example, an input feature map of the convolutional layer is an output feature map (for example, the second feature map) of the feature compression layer, a stride is 1, and a quantity of output channels $C_{out3}=C_{im}$; and a stride of the deconvolution layer is 2, and a quantity of output channels $C_{out4}=C_{in}$.

In a second possible case, the feature compression layer 312 includes two convolutional layers, a first convolutional layer is used to reduce a channel quantity of a first feature map, and a second convolutional layer is used to implement downsampling on the first feature map, to obtain the second feature map. For example, a quantity of input channels of the first convolutional layer is denoted as $C_{in}$, a stride is 1, and a quantity of output channels $C_{out1}<C_{in}$; and an input of the second convolutional layer is an output of the first convolutional layer, a stride is 2, and a quantity of output channels $C_{out2}<C_{out1}$. Correspondingly, the feature reconstruction layer 321 includes one convolutional layer and one deconvolution layer. The deconvolution layer is first used to perform upsampling on the second feature map, and then a channel quantity of the second feature map is increased by the convolutional layer, to obtain the third feature map. For example, an input of the deconvolution layer is an output of the feature compression layer, a stride is 2, and a quantity of output channels $C_{out3}=C_{out1}$; and a stride of the convolutional layer is 1, and a quantity of output channels $C_{out4}=C_{in}$.

In a third possible case, the feature compression layer 312 and the feature reconstruction layer 321 may be asymmetric structures. For example, the feature compression layer includes three convolutional layers. A quantity of input channels of a first convolutional layer is denoted as $C_{in}$, a stride is 1, and a quantity of output channels $C_{out1}<C_{in}$. An input of a second convolutional layer is an output of the first convolutional layer, a stride is 2, and a quantity of output channels $C_{out2}=C_{out1}$. An input of a third convolutional layer is an output of the second convolutional layer, a stride is 2, and a quantity of output channels $C_{out3}=C_{out1}$. Correspondingly, the feature reconstruction layer includes two deconvolution layers. An input of a first deconvolution layer is an output of the feature compression layer, a stride is 2, and a quantity of output channels $C_{out4}=C_{out3}$. An input of a second deconvolution layer is an output of the first deconvolution layer, a convolutional kernel is $3\times3$, $5\times5$, or $7\times7$, a stride is 2, and a quantity of output channels $C_{out5}=C_{in}$.

The foregoing first to third possible cases are merely embodiments provided in this application, and do not constitute a limitation on this application. In some other possible cases, the feature compression layer may further include more convolutional layers, and the feature reconstruction layer may also include more convolutional layers and more deconvolution layers.

In an optional implementation, the output of the convolutional layer or the deconvolution layer may be processed by an activation layer such as a ReLU, a BN layer, or the like and then input into a next convolutional layer or deconvolution layer, to improve nonlinearity of an output feature map of the feature compression layer or the feature reconstruction layer, thereby improving image processing accuracy. This is not limited in this application.

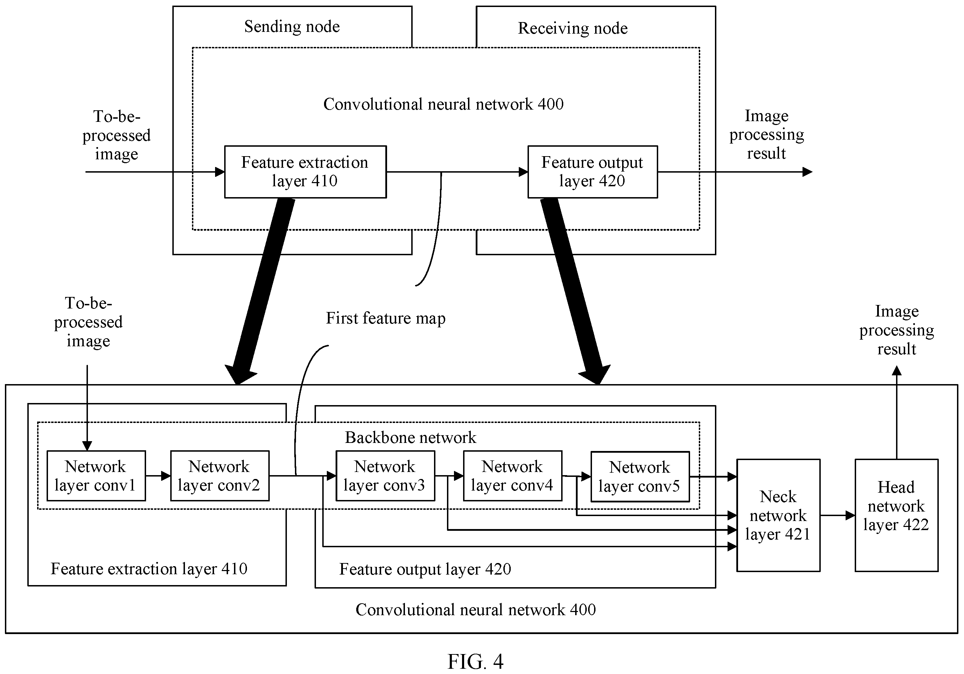

In an optional implementation, the neural network including the feature extraction layer 311 and the feature output layer 322 may be used to perform image processing on the to-be-processed image. FIG. 4 is a schematic diagram of a structure of a convolutional neural network in a conventional technology. The convolutional neural network 400 includes a feature extraction layer 410 and a feature output layer 420. The feature compression layer 312 shown in FIG. 3 may implement a same function as that is implemented by the feature extraction layer 410, and the feature reconstruction layer 321 shown in FIG. 3 may implement a same function as that is implemented by the feature output layer 420.

As shown in FIG. 4, the feature extraction layer 410 may include a network layer conv1 and a network layer conv2, and both the network layer conv1 and the network layer conv2 may be convolutional layers. For example, if a parameter of a to-be-processed image is $W\times H\times 3$, a parameter of an output feature map of the network layer conv1 is $(W/2) \times (H/2) \times 64$, and a parameter of an output feature map (a first feature map) of the network layer conv2 is $(W/4) \times (H/4) \times 256$.

The feature output layer 420 may include a network layer conv3, a network layer conv4, and a network layer conv5. For example, the network layer conv3 to the network layer conv5 may be convolutional layers. For example, a parameter of an output feature map of the network layer conv3 is $(W/8) \times (H/8) \times 512$, a parameter of an output feature map of the network layer conv4 is $(W/16) \times (H/16) \times 1024$, and a parameter of an output feature map of the network layer conv5 is $(W/32) \times (H/32) \times 2048$.

As shown in FIG. 4, a backbone network of the convolutional neural network 400 includes the network layer conv1 to the network layer conv5, and the backbone network is used to extract a plurality of feature maps of the to-be-processed image.

In addition, the convolutional neural network further includes a neck network (neck network) layer 424 and a head network (head network) layer 425.

The neck network layer 424 may be used to further perform integration on feature maps that are output by a head network, to obtain a new feature map. For example, the neck network layer 424 may be a feature pyramid network (feature pyramid network, FPN).

The head network layer 425 is used to process a feature map that is output by the neck network layer 424, to obtain an image processing result. For example, the head network includes a fully connected layer and a softmax module. For more content of the neck network (neck network) and the head network (head network), refer to related descriptions in a conventional technology. Details are not described herein.

In other words, in this application, the feature compression layer and the feature reconstruction layer are introduced into the backbone network of the convolutional neural network, so that the first feature map can be compressed while image processing is ensured, and the channel quantity of the first feature map can be reduced, thereby reducing the amount of data transmitted between the sending node and the receiving node.

S260: The receiving node processes the second feature map by using a feature output layer and an image processing layer that are included in the convolutional neural network, to obtain an image processing result.

The image processing layer may include the neck network layer 424 and the head network layer 425 shown in FIG. 4. The image processing result indicates information about the to-be-processed image.

In a first possible design, the image processing result may be a result of performing target detection on the to-be-processed image, and the information may be a region in the to-be-processed image. As shown in FIG. 1, in a road surveillance scenario, the sending node may be the terminal 116 (for example, a surveillance camera at an intersection), and the receiving node may be the server 131. For example, the terminal 116 captures a to-be-processed image when the terminal 114 (for example, a car or a truck) passes through an intersection, and sends, to the server 131, a feature map obtained after feature extraction and compression are performed on the to-be-processed image. If the server 131 determines that a license plate of the terminal 114 is a non-local license plate, the server 131 sends information about the non-local license plate to a central control device for traffic management in a form of a data packet.

In a second possible design, the image processing result may be a result of performing facial recognition on the to-be-processed image. As shown in FIG. 1, in a scenario of an entrance and exit of an administrative building, the sending node may be the terminal 115 (for example, a surveillance camera of the administrative building), and the receiving node may be the server 131. For example, the terminal 115 captures facial images when a user 1 and a user 2 enter the administrative building, and sends, to the server 131, feature maps obtained after feature extraction and compression are performed on the facial images. The server 131 determines whether the user 1 and the user 2 are authorized users registered in the administrative building. For example, the server 131 matches a facial feature in the to-be-processed image against a face match library, and if the matching succeeds, the server 131 determines that the user 1 is an authorized user, and sends authentication success information to the terminal 115. The terminal 115 opens an entrance and exit gate based on the authentication success information, and the user 1 can enter the administrative building through the entrance and exit gate.

In a third possible design, the image processing result may be a result of performing object classification on the to-be-processed image, and the information about the to-be-processed image may be object classification information in the image. As shown in FIG. 1, in a residential scenario, the sending node may be any one of the terminal 111 to the terminal 113, and the receiving node may be the server 131. For example, the terminal 111 captures images in a house, including a sofa, a television, and a table, and sends, to the server 131, feature maps obtained after feature extraction and compression are performed on the images. The server 131 determines types of the objects in the images based on the feature maps, and a shopping link corresponding to each type of image, and sends the information to the terminal 111.

In a fourth possible design, the image processing result may be a result of performing geographic positioning on the to-be-processed image. As shown in FIG. 1, in a vehicle driving scenario, the sending node may be the terminal 114 (for example, an event data recorder installed in a car or a truck), and the receiving node may be the server 131. For example, the terminal 114 performs feature extraction and compression on a to-be-processed image (for example, a road image, where the road image includes relative location information of a house, a tree, an administrative building, and each reference object that are shown in FIG. 1) that is shot when the terminal 114 approaches an intersection, to obtain a feature map, and sends the feature map to the server 131. The server 131 performs feature reconstruction and image processing on the feature map to obtain a geographical location corresponding to the to-be-processed image, and sends the geographical location to the terminal 114.

The foregoing possible designs are merely possible implementations provided to describe the image processing method in this application, and do not constitute a limitation on this application. The image processing method provided in this application may be further applied to more image processing scenarios.

Optionally, as shown in FIG. 2, the image processing method further includes the following steps S270 and S280.

S270: The receiving node sends the image processing result.

In a possible case, the receiving node may send the image processing result to the sending node shown in FIG. 2.

In another possible case, the receiving node may send the image processing result to another node. For example, in a road surveillance scenario, the another node may be a central control device in a traffic management system.

In the image processing method provided in this application, the sending node needs to send only the second feature map to the receiving node, and the channel quantity of the second feature map is less than the channel quantity of the first feature map. Therefore, when a resolution of the first feature map is not increased, a data amount sent by the sending node to the receiving node is reduced, and a delay of transmission between the terminal-side device and the cloud-side device is reduced.

S280: The sending node displays the image processing result.

The sending node may have a display area. For example, the display area may include a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light Emitting Diode, AMOLED), a flexible light-emitting diode (Flex Light-Emitting Diode, FLED), a mini-LED, a micro-LED, a micro-OLED, a quantum dot light-emitting diode (Quantum Dot Light-Emitting Diodes, QLED), or the like. In some embodiments, the sending node may include one or more displays 194.

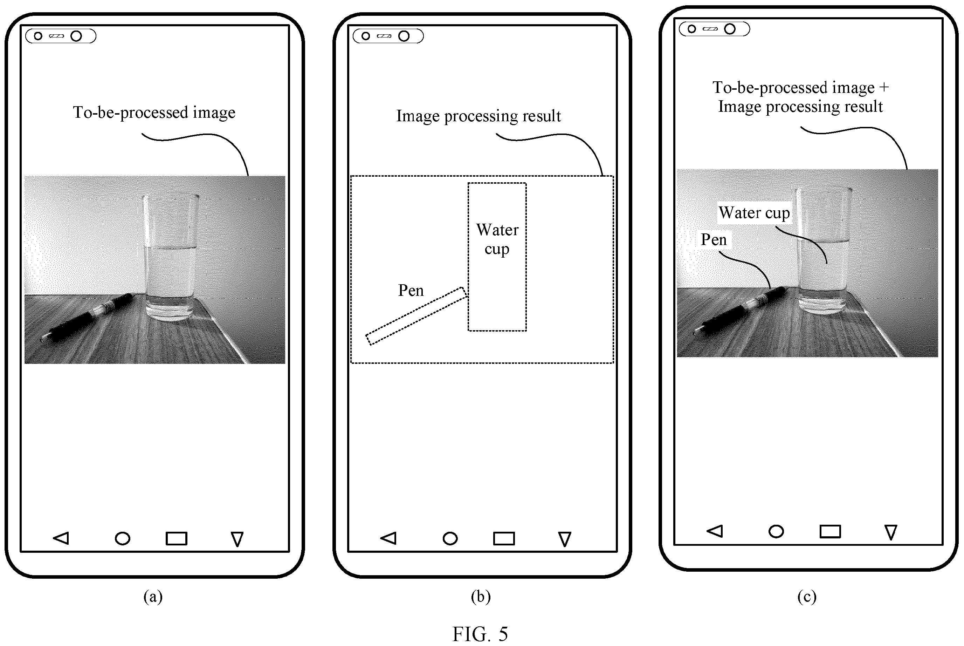

Descriptions are provided herein by using an example in which the sending node is a mobile phone and the image processing scenario is object classification. In a first possible example, the sending node displays only the to-be-processed image. As shown in FIG. 5(a), the mobile phone displays the to-be-processed image, and the to-be-processed image includes a plurality of graphs.

In a second possible example, the sending node displays only the image processing result. As shown in FIG. 5(b), the mobile phone displays types of objects in the to-be-processed image, such as a water cup or a pen.

In a third possible example, the sending node displays the to-be-processed image and the image processing result. As shown in FIG. 5(c), when displaying the to-be-processed image, the mobile phone marks a type of each object at a corresponding location in the to-be-processed image.

The to-be-processed image and the image processing result are displayed, helping a user obtain various information in the to-be-processed image, such as object classification, facial recognition, and target detection. This simplifies a process of manually obtaining image information, and improves efficiency of obtaining visual information.

In an optional implementation, after receiving the image processing result, the sending node may further perform other processing. For example, a name of an object in an image shot by the sending node is notified to a user. Alternatively, if the receiving node analyzes the second feature map and gives warning information, the sending node sends a warning voice prompt to remind a user in an environment corresponding to the sending node to pay attention to safety. This is not limited in this application.

It should be noted that the foregoing embodiment is described by using an example in which the sending node may implement a function and/or functions of the terminal-side device and/or the edge device shown in FIG. 1, and the receiving node may implement a function of the cloud-side device shown in FIG. 1. In another possible case, if the sending node may implement a function of the terminal-side device shown in FIG. 1, the receiving node may further implement a function of the edge device shown in FIG. 1.

The foregoing convolutional neural network may be obtained by adding a bottleneck structure layer to an existing image processing network (the convolutional neural network 400 shown in FIG. 4), and training the bottleneck structure layer based on the image processing network. The bottleneck structure (bottleneck structure) is a multi-layer network structure. A quantity of input channels is the same as a quantity of output channels of the bottleneck structure layer, but a channel quantity of an intermediate feature map of the bottleneck structure layer is less than the quantity of input channels. For example, input data (for example, the first feature map of the to-be-processed image) of the bottleneck structure layer first passes through one or more neural network layers, to obtain intermediate data (for example, the second feature map), and then the intermediate data passes through one or more neural network layers, to obtain output data (for example, the third feature map). A data amount (that is, a product of a width, a height, and a channel quantity) of the intermediate data is less than that of the input data and that of the output data.

In the image processing method provided in the foregoing embodiment of this application, the image processing network includes a feature extraction layer, a feature output layer, and an image processing layer. The bottleneck structure layer includes a feature compression layer and a feature reconstruction layer, and the convolutional neural network may include two parts: a first part network, including a feature extraction layer and a feature compression layer, and a second part network, including a feature reconstruction layer, a feature output layer, and an image processing layer. For example, a function of the sending node may be implemented by using the first part network of the convolutional neural network that is deployed on the sending node, and a function of the receiving node may be implemented by using the second part network of the convolutional neural network that is deployed on the receiving node.

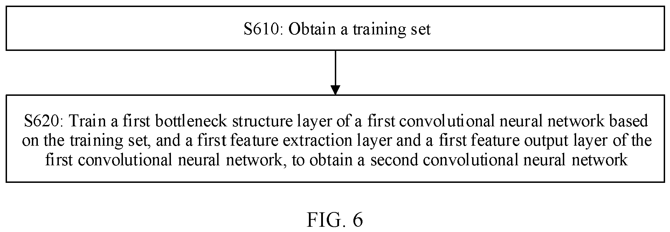

To obtain the convolutional neural network in the foregoing embodiment to implement the foregoing image processing method, this application further provides a convolutional neural network training method. FIG. 6 is a schematic flowchart of a training method according to this application. The training method may be performed by a sending node or a receiving node, or may be performed by another electronic device. This is not limited in this application. The training method includes the following steps.

S610: Obtain a training set.

The training set includes at least one training image. For example, the training set may include 50,000 to 100,000 training images, and the training image may be any one of a binary image, a grayscale image, an index image, and a true-color image.

S620: Train a first bottleneck structure layer of a first convolutional neural network based on the training set, and a first feature extraction layer and a first feature output layer of the first convolutional neural network, to obtain a second convolutional neural network.

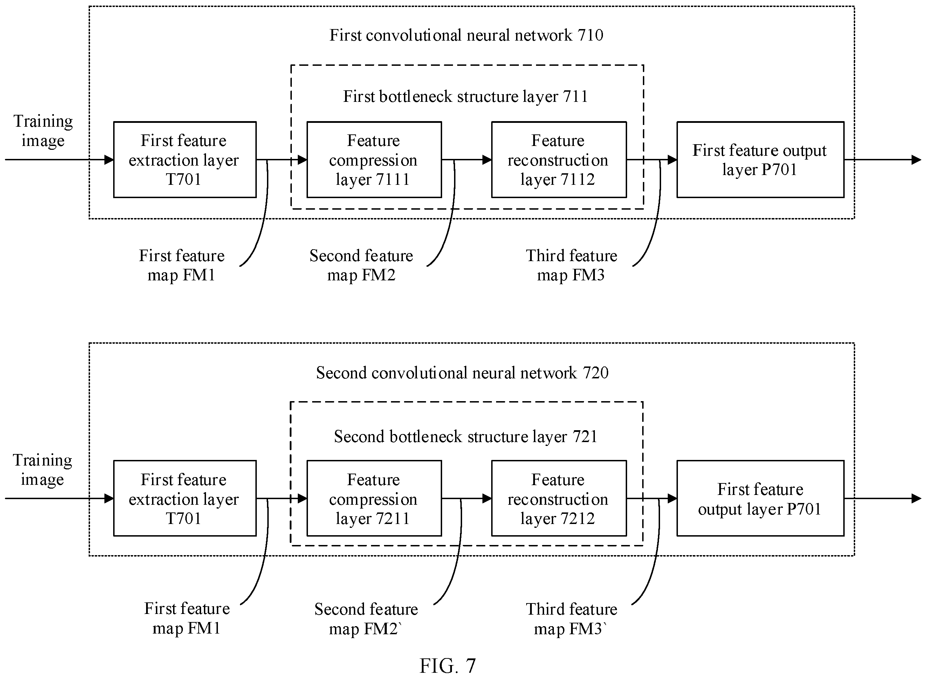

FIG. 7 is a schematic diagram 1 of training of a convolutional neural network according to this application. The first convolutional neural network 710 includes a first feature extraction layer T701, a first bottleneck structure layer 711, and a first feature output layer P701. The second convolutional neural network 720 includes the first feature extraction layer T701, a second bottleneck structure layer 721, and the first feature output layer P701. The first feature extraction layer T701 may be used to implement a function of the feature extraction layer 311 shown in FIG. 3, the first feature output layer P701 may be used to implement a function of the feature output layer 322 shown in FIG. 3, and the second bottleneck structure layer 721 may be used to implement functions of the feature compression layer 312 and the feature reconstruction layer 321 shown in FIG. 3.

Both the first bottleneck structure layer 711 and the second bottleneck structure layer 721 are in bottleneck structures (bottleneck structure), and the bottleneck structure is a multi-layer network structure. For example, input data (for example, the first feature map of the to-be-processed image) of the second bottleneck structure layer 721 first passes through one or more neural network layers, to obtain intermediate data (for example, the second feature map), and then the intermediate data passes through one or more neural network layers, to obtain output data (for example, the third feature map). A data amount (that is, a product of a width, a height, and a channel quantity) of the intermediate data is less than that of the input data and that of the output data.

As shown in FIG. 7, a channel quantity of a second feature map FM2' is less than a channel quantity of a first feature map FM1.

The second feature map FM2' is obtained after the first feature extraction layer T701 and the second bottleneck structure layer 721 are used to perform feature extraction and compression on the training image. For example, the first feature extraction layer T701 is used to perform feature extraction on the training image, to obtain the first feature map FM1, and a feature compression layer 7211 in the second bottleneck structure layer 721 is used to compress the first feature map FM1 to obtain the second feature map FM2'.

The first feature map FM1 is obtained after the first feature extraction layer T701 is used to perform feature extraction on the training image.

In a possible case, as shown in FIG. 7, a channel quantity of a second feature map FM2 is greater than or equal to a channel quantity of the second feature map FM2'.

The second feature map FM2 is obtained after the first feature extraction layer T701 and the first bottleneck structure layer 711 are used to perform feature extraction and compression on the training image. For example, the first feature extraction layer T701 is used to perform feature extraction on the training image, to obtain the first feature map FM1, and a feature compression layer 7111 in the first bottleneck structure layer 711 is used to compress the first feature map FM1, to obtain the second feature map FM2.

When a pooling layer in the convolutional neural network is used to extract a feature map of a to-be-processed image, a resolution of the to-be-processed image is decreased or remains unchanged. The second convolutional neural network obtained by training the first convolutional neural network by using the training method provided in this application may be used to perform feature extraction and compression on the to-be-processed image. This reduces a channel quantity of the feature map of the to-be-processed image, and further reduces a data amount of the feature map sent by the sending node to the receiving node.

In addition, because the first convolutional neural network and the second convolutional neural network have the same first feature extraction layer and the same first feature output layer, only a bottleneck structure layer needs to be trained in the training of the convolutional neural network. This reduces computing resources required for the training of the convolutional neural network.

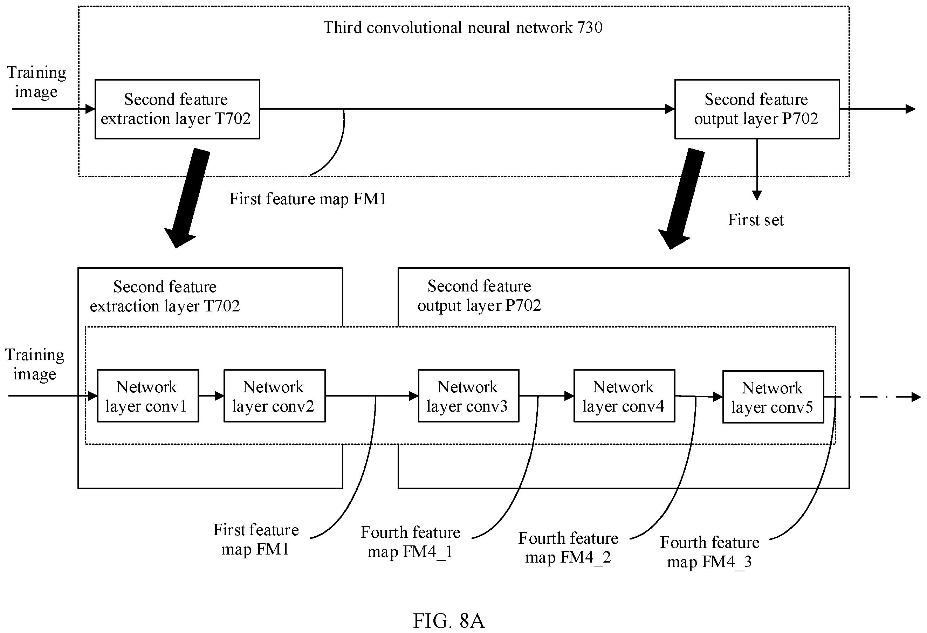

FIG. 8A is a schematic diagram 2 of training of a convolutional neural network according to this application. A third convolutional neural network 730 includes a second feature extraction layer T702 and a second feature output layer P702, a parameter of the first feature extraction layer T701 is the same as a parameter of the second feature extraction layer T702, and a parameter of the first feature output layer P701 is the same as a parameter of the second feature output layer P702. The third convolutional neural network 730 may be used to implement a function of the convolutional neural network 400 shown in FIG. 4. The foregoing parameter may include a maximum quantity of iterations (max_batches), a batch size (batch_size), or the like. For various parameters of the convolutional neural network, refer to related descriptions in a conventional technology. Details are not described herein.

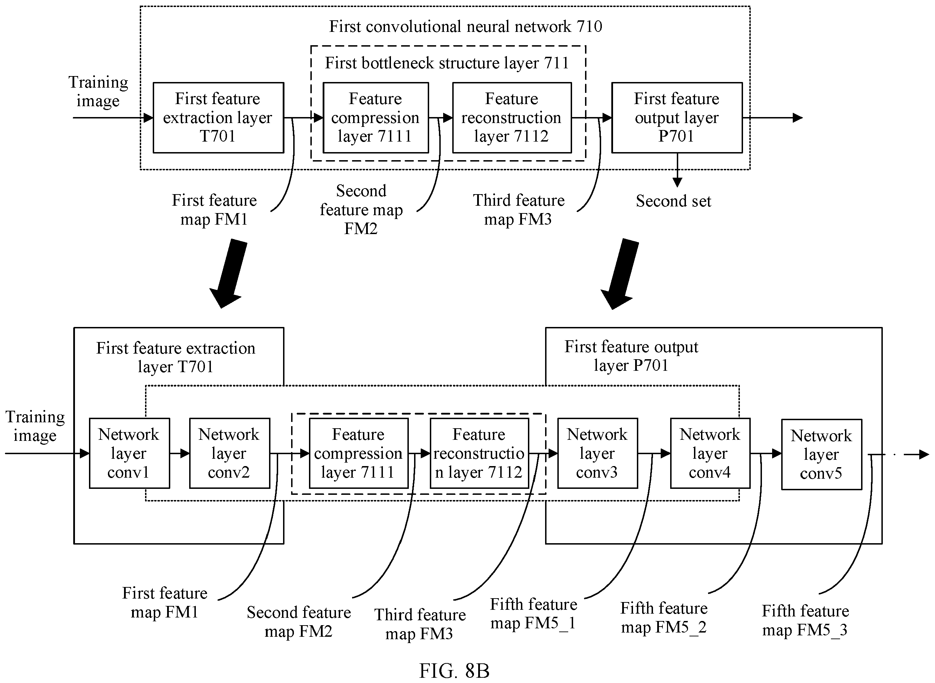

FIG. 8B is a schematic diagram 3 of training of a convolutional neural network according to this application. For technical content of the first convolutional neural network 710 shown in FIG. 8B, refer to the first convolutional neural network 710 shown in FIG. 7. Details are not described herein again.

For S620, a conventional approach is to train the first convolutional neural network 710 by using a training set (including a training image and annotation information corresponding to the training image, such as an object detection box and a feature category) used when the third convolutional neural network 730 is trained, to obtain a model parameter of the first bottleneck structure layer 711. However, because the training set used when the third convolutional neural network 730 is trained includes the annotation information corresponding to the training image, training of the first convolutional neural network 710 consumes a large quantity of computing resources, and a training speed is relatively low.

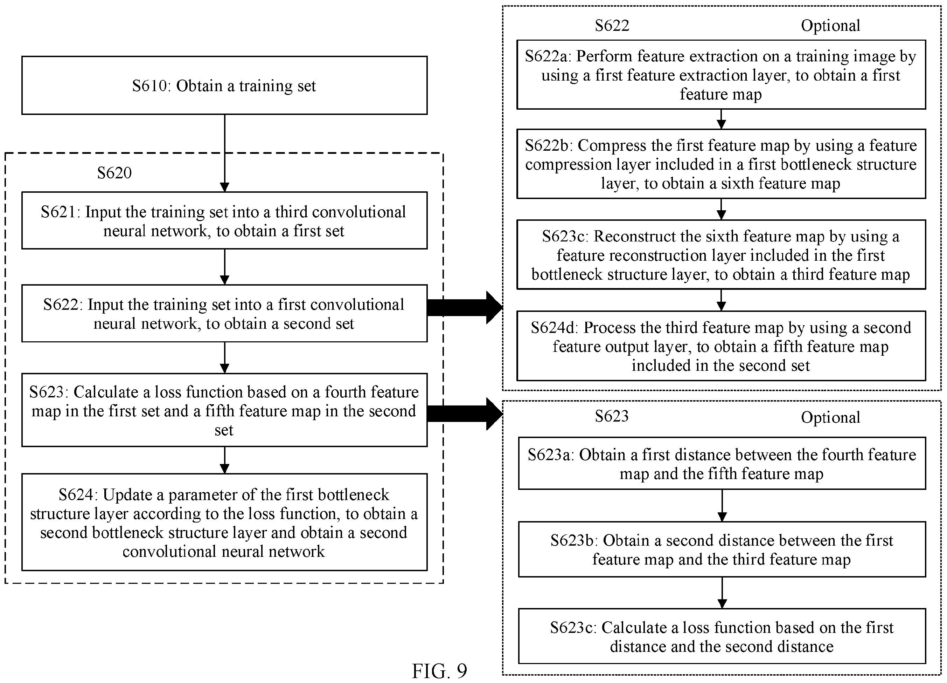

Therefore, to resolve the foregoing problem, FIG. 9 is a schematic flowchart of another training method according to this application. S620 may include the training method corresponding to operation steps S621 to S624.

S621: Input the training set into a third convolutional neural network, to obtain a first set.

The first set includes a fourth feature map, and the fourth feature map is obtained after the second feature extraction layer and the second feature output layer are used to perform feature extraction and image processing on the training image. Descriptions are provided herein by using an example in which the second feature extraction layer T702 shown in FIG. 8A and FIG. 8B includes a network layer conv1 and a network layer conv2, and the second feature output layer P702 shown in FIG. 8A and FIG. 8B includes a network layer conv3, a network layer conv4, and a network layer conv5. The first set may include any one or more of a fourth feature map FM4_1 obtained after the network layer conv3 is used to process the first feature map FM1, a fourth feature map FM4_2 obtained after the network layer conv4 is used to process the fourth feature map FM4_1, and a fourth feature map FM4_3 obtained after the network layer conv5 is used to process the fourth feature map FM4_2.

It should be noted that an example in which the third convolutional neural network does not include a bottleneck structure layer is used for description herein. However, in some possible implementations, the third convolutional neural network may include a bottleneck structure layer. For example, when the third convolutional neural network includes N (N is a positive integer) bottleneck structure layers, the first convolutional neural network has one more first bottleneck structure layer than the third convolutional neural network. For example, in addition to all structures of the third convolutional neural network, the first convolutional neural network further includes one first bottleneck structure layer. In the training method provided in this embodiment of this application, the first bottleneck structure layer of the first convolutional neural network is trained by using the third convolutional neural network, to obtain the second convolutional neural network.

S622: Input the training set into the first convolutional neural network, to obtain a second set.

The second set includes a fifth feature map, and the fifth feature map is obtained after the first bottleneck structure layer and the first feature output layer are used to perform feature reconstruction and image processing on the second feature map. Descriptions are provided herein by using an example in which the first feature extraction layer T701 shown in FIG. 8B includes a network layer conv1 and a network layer conv2, and the first feature output layer P701 shown in FIG. 8B includes a network layer conv3, a network layer conv4, and a network layer conv5. The second set may include any one or more of a fifth feature map FM5_1 obtained after the network layer conv3 is used to process a third feature map FM3, a fifth feature map FM5_2 obtained after the network layer conv4 is used to process the fifth feature map FM5_1, and a fifth feature map FM5_3 obtained after the network layer conv5 is used to process the fifth feature map FM5_2.

S623: Calculate a loss function based on the fourth feature map in the first set and the fifth feature map in the second set.

In a possible implementation, the loss function may be calculated based on a distance between the fourth feature map and the fifth feature map.

In an example, the loss function may be calculated by using a mean absolute error L1 norm (1-norm) between the fourth feature map and the fifth feature map. For example, $L1 \text{ norm}=\|x\|_1=\sum_{i=1}^{N} |x_i|$, where $i$ is a sequence number, $x_i$ is a distance between a fourth feature map and a fifth feature map of an $i^{th}$ group, and N is a total number of groups of the fourth feature map included in the first set and the fifth feature map included in the second set.

In another example, the loss function may be further calculated by using a mean square error L2 norm (2-norm) between the fourth feature map and the fifth feature map. For example,

$$L2 \text{ norm}=\|x\|_2=\sqrt{\sum_{i=1}^{N} x_i^2}$$

, where $i$ is a sequence number, $x_i$ is a distance between a fourth feature map and a fifth feature map of an $i^{th}$ group, and N is a total number of groups of the fourth feature map included in the first set and the fifth feature map included in the second set.

For example, the loss function is denoted as Loss. Herein, an example in which the loss function is calculated based on the mean square error L2 norm (2-norm) between the fourth feature map and the fifth feature map is used, and Loss=w1×L2 (FM4_1, FM5_1) + w2×L2 (FM4_2, FM5_2) + w3×L2 (FM4_3, FM5_3).

Herein, w1, w2, and w3 are preset weighting coefficients, and w1 to w3 may all be positive real numbers. For example, w1=0.3, w2=0.3, and w3=0.4. L2 (A, B) indicates L2 norm (2-norm) used to calculate a difference between three-dimensional data of A and B.

In an optional implementation, the loss function may further be calculated by using a regularization term of the second feature map FM2, and the regularization term may include any one of the following three terms.

1. Mean amplitude of the second feature map FM2, where a weighting coefficient of this term is a negative real number.
2. L1 norm of a gradient between a feature element of the second feature map FM2 and a feature element neighboring to the feature element of the second feature map FM2 on a same channel, where a weighting coefficient of this term is a negative real number.
3. Estimated coded bit value of the second feature map FM2, where a weighting coefficient of this term is a positive real number.

During the image processing, the second feature map of the to-be-processed image is obtained by compressing the first feature map. Therefore, in a process of calculating the loss function, the regularization term of the second feature map FM2 is added, and the first bottleneck structure layer is trained based on the regularization term of the second feature map. This helps reduce an error caused by compressing the first feature map.

S624: Update a parameter of the first bottleneck structure layer according to the loss function, to obtain the second bottleneck structure layer and obtain the second convolutional neural network.

For example, the parameter of the first bottleneck structure layer is updated by using a backward propagation (backward propagation, BP) algorithm according to the loss function obtained through calculation, to obtain the second bottleneck structure layer, and therefore obtain the second convolutional neural network. For a related principle of the BP algorithm, refer to related descriptions in a conventional technology. Details are not described herein.

In the training method provided in this application, a condition for obtaining the second convolutional neural network may be that a quantity of times of backward propagation reaches a threshold, or may be that a value of the loss function is less than or equal to a threshold, or may be that a difference between values of the loss function that are obtained through two consecutive times of calculation is less than or equal to a threshold. This is not limited in this application.

According to the training method provided in this application, especially for a same training image, a loss function is calculated for a distance between a plurality of corresponding feature maps (the fourth feature map and the fifth feature map) in the first convolutional neural network and the third convolutional neural network, to obtain the second convolutional neural network. This helps reduce the distance between the fourth feature map and the fifth feature map as much as possible, thereby reducing an error between the first feature map and the third feature map, and improving image processing accuracy.

In another optional implementation, FIG. 9 is a schematic flowchart of another training method according to this application. S622 may include the following steps S622a to S622d.

S622a: Perform feature extraction on a training image by using a first feature extraction layer, to obtain a first feature map.

As shown in FIG. 8B, feature extraction is performed on the training image by using the first feature extraction layer T701, to obtain the first feature map FM1.

S622b: Compress the first feature map by using a feature compression layer, to obtain a sixth feature map.

As shown in FIG. 8B, the first feature map FM1 is compressed by using the feature compression layer 7111, to obtain the second feature map FM2 (for example, the foregoing sixth feature map). A channel quantity of the second feature map FM2 is less than a channel quantity of the first feature map FM1.

S622c: Reconstruct the sixth feature map by using a feature reconstruction layer, to obtain a third feature map.

As shown in FIG. 8B, the second feature map FM2 is reconstructed by using the feature reconstruction layer 7111, to obtain the third feature map FM3. The channel quantity of the first feature map FM1 is the same as a channel quantity of the third feature map FM3, and a resolution of the first feature map FM1 may also be the same as a resolution of the third feature map FM3.

S622d: Process the third feature map by using a second feature output layer, to obtain a fifth feature map included in a second set.

As shown in FIG. 8B, the third feature map FM3 is processed by using the first feature output layer 7112, to obtain the fifth feature map (for example, any one or more of a fifth feature map FM5_1, a fifth feature map FM5_2, and a fifth feature map FM5_3).

S623 may include the following steps S623a to S623c.

S623a: Obtain a first distance between the fourth feature map and the fifth feature map.

The first distance may be L1 norm or L2 norm between the fourth feature map and the fifth feature map.

S623b: Obtain a second distance between the first feature map and the third feature map.

The second distance may be L1 norm or L2 norm between the first feature map and the third feature map.

For example, as shown in FIG. 8A and FIG. 8B, the second distance may be L2 norm between the first feature map FM1 and the third feature map FM3.

S623c: Calculate a loss function based on the first distance and the second distance.

For example, the loss function is denoted as Loss. Herein, assuming that the loss function is calculated based on a mean square error L2 norm (2-norm) between the fourth feature map FM4 and the fifth feature map FM5 and a mean square error L2 norm (2-norm) between the first feature map FM1 and the third feature map FM3, Loss=w1×L2 (FM4_1, FM5_1) + w2×L2 (FM4_2, FM5_2) + w3×L2 (FM4_3, FM5_3) + w4×L2 (FM1, FM3).

Herein, w1, w2, w3, and w4 are preset weighting coefficients, and w1 to w4 may all be positive real numbers. For example, w1=w2=w3=w4=0.25, or w1=0.35, w2=w3=0.25, and w1 =0.15, or w1=0.4, w2=0.3, w3=0.2, and w4=0.1. L2 (A, B) indicates L2 norm (2-norm) used to calculate a difference between three-dimensional data of A and B.

The loss function is calculated by using both the first distance between the fourth feature map and the fifth feature map and the second distance between the first feature map and the third feature map. This helps reduce the distance between the fourth feature map and the fifth feature map as much as possible, and reduces the distance between the first feature map and the third feature map as much as possible, thereby reducing a processing error between the feature compression layer and the feature reconstruction layer, and improving image processing accuracy.

In a conventional technology, a PCA method is usually used for data dimensionality reduction of a feature map. The PCA method is a multivariate statistical analysis method in which linear transformation is performed on a plurality of variables to select a relatively small quantity of important variables. For example, in a process of compressing a feature map of a neural network, a terminal-side device obtains, by using the PCA method, principal components of a group of images from 128-channel original feature maps corresponding to the images. For example, the group of images includes three images, and quantities of principal components are 47, 48, and 49. In a process in which a cloud-side device reconstructs feature maps based on the principal components of the images, quantities of principal components of the images are different. Therefore, after the three images are reconstructed, channel quantities of reconstructed feature maps of the images may change to 126, 127, and 128, and therefore the channel quantity of the original feature maps is different from the channel quantity of the reconstructed feature maps.

Compared with a value difference between the original feature map and the reconstructed feature map in the PCA method in a conventional technology, when the first convolutional neural network is trained by using the training method in this application, a distance between the uncompressed first feature map and the reconstructed third feature map is considered. In this way, although a process of compressing and reconstructing the first feature map exists when the second convolutional neural network is obtained through training, the difference between the first feature map and the third feature map is definitely less than the value difference between the original feature map and the reconstructed feature map in the PCA method. In other words, the image processing method provided in this application has better compression performance than the PCA method.

In an example, in the PCA method, data reduction by about three times may be implemented when a mean average precision (mean Average Precision, mAP) indicator decreases by 2%. For example, when a mean value of quantities of principal components generated from 128-channel original feature maps corresponding to a group of images by using the PCA method is 47.9, the mAP indicator decreases by about 2%.

However, by using the second convolutional neural network obtained by using the training method in this application, data reduction by 64 times may be performed on 128-channel first feature maps corresponding to a group of images (for example, a width, a height, and a channel quantity of the second feature map are respectively reduced to 1/4 of a width, a height, and a channel quantity of the first feature map). Compared with a bitstream obtained by compressing the first feature map on which reduction is not performed, a bitstream obtained by compressing the second feature map obtained after data reduction by 64 times is performed reduces a data amount by 90%, and less than 1% mAP is lost.

In addition, according to the training method provided in this application, only a large quantity of training images need to be input, and the feature maps generated in the first convolutional neural network and the third convolutional neural network are excited by the training images as a guide, without depending on manual annotation of data of a visual task, thereby reducing data dependency of the training images. The feature map is used as a training guide, so that the training method provided in this application is more universal.

It may be understood that, to implement the functions in the foregoing embodiments, a host includes a corresponding hardware structure and/or software module for performing each function. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

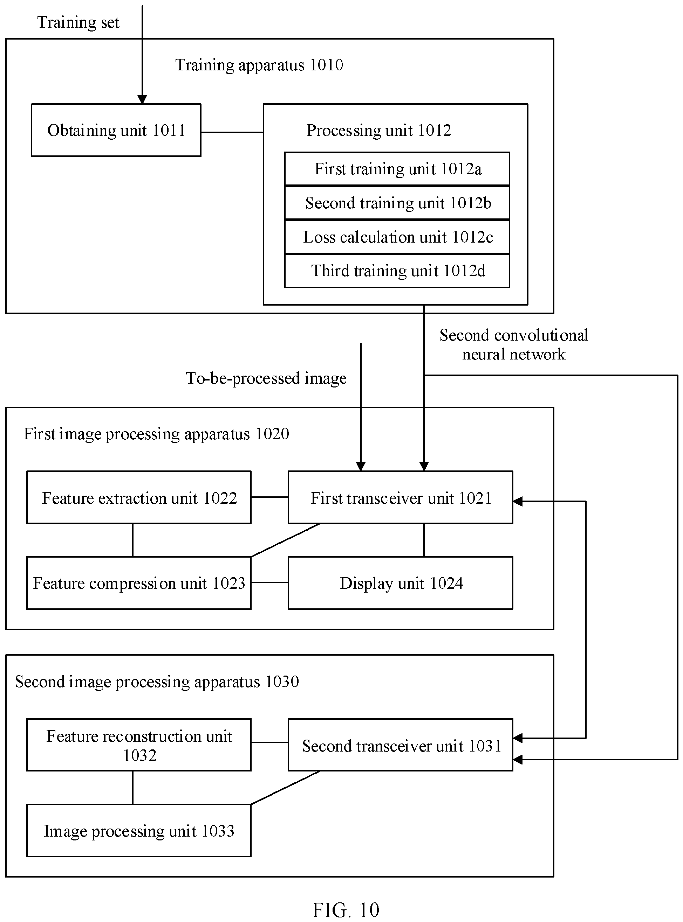

FIG. 10 is a schematic diagram of a structure of a training apparatus and an image processing apparatus according to this application. The following describes structures and functions of a training apparatus 1010, a first image processing apparatus 1020, and a second image processing apparatus 1030 with reference to FIG. 10. It should be understood that, in this embodiment, only structures and functional modules of the training apparatus 1010, the first image processing apparatus 1020, and the second image processing apparatus 1030 are divided as an example. Specific division is not limited in this application.

As shown in FIG. 10, the training apparatus 1010 includes an obtaining unit 1011 and a processing unit 1012. The training apparatus 1010 is configured to implement the training method corresponding to the operation steps in the method embodiment shown in FIG. 6 or FIG. 9.

When the training apparatus 1010 is configured to implement a function in the method embodiment shown in FIG. 6, the obtaining unit 1011 is configured to perform S610, and the processing unit 1012 is configured to perform S620.

Optionally, when the training apparatus 1010 is configured to implement a function in the method embodiment shown in FIG. 9, the processing unit 1012 includes a first training unit 1012a, a second training unit 1012b, a loss calculation unit 1012c, and a third training unit 1012d. The first training unit 1012a is configured to perform S621, the second training unit 1012b is configured to perform S622 and possible sub-steps S622a to S622d of S622, the loss calculation unit 1012c is configured to perform S623 and possible sub-steps S623a to S623c of S623, and the third training unit 1012d is configured to perform S624.

As shown in FIG. 10, the first image processing apparatus 1020 includes a first transceiver unit 1021, a feature extraction unit 1022, a feature compression unit 1023, and a display unit 1024. The first image processing apparatus 1020 is configured to implement the image processing method corresponding to the operation steps of the sending node in the method embodiment shown in FIG. 2.

When the first image processing apparatus 1020 is configured to implement a function of the sending node in the method embodiment shown in FIG. 2, the first transceiver unit 1021 is configured to perform S210 and S240, the feature extraction unit 1022 is configured to perform S220, and the feature compression unit 1023 is configured to perform S230. Optionally, the display unit 1024 is configured to perform S280.

As shown in FIG. 10, the second image processing apparatus 1030 includes a second transceiver unit 1031, a feature reconstruction unit 1032, and an image processing unit 1033. The first image processing apparatus 1020 is configured to implement the image processing method corresponding to the operation steps of the receiving node in the method embodiment shown in FIG. 2.

When the second image processing apparatus 1030 is configured to implement a function of the receiving node in the method embodiment shown in FIG. 2, the second transceiver unit 1031 is configured to perform S270, the feature reconstruction unit 1032 is configured to perform S250, and the image processing unit 1033 is configured to perform S260.

For more detailed descriptions of the training apparatus 1010, the first image processing apparatus 1020, and the second image processing apparatus 1030, directly refer to the related descriptions in the method embodiment shown in FIG. 2, FIG. 6, or FIG. 9. Details are not described herein again.

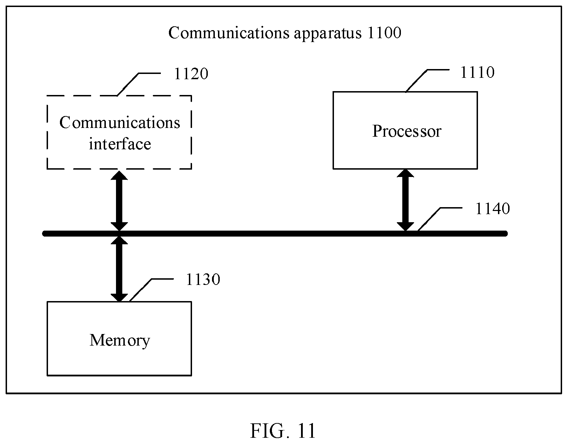

FIG. 11 is a schematic diagram of a structure of a communications apparatus according to this application. The communications apparatus 1100 includes a processor 1110 and a communications interface 1120. The processor 1110 and the communications interface 1120 are coupled to each other. It may be understood that the communications interface 1120 may be a transceiver or an input/output interface. Optionally, the communications apparatus 1100 may further include a memory 1130 for storing instructions executed by the processor 1110, or input data required by the processor 1110 to run the instructions, or data generated after the processor 1110 runs the instructions.

When the communications apparatus 1100 is configured to implement the method shown in FIG. 2, FIG. 6, or FIG. 9, functions of the training apparatus 1010, the first image processing apparatus 1020, and the second image processing apparatus 1030 may be implemented. Details are not described herein again.

In this embodiment of this application, a specific connection medium between the communications interface 1120, the processor 1110, and the memory 1130 is not limited. In this embodiment of this application, in FIG. 11, the communications interface 1120, the processor 1110, and the memory 1130 are connected through a bus 1140. The bus is represented by using a thick line in FIG. 11. A manner of connection between other components is merely an example for description, and constitutes no limitation. The bus may be classified into an address bus, a data bus, a control bus, and the like. For ease of representation, only one bold line is used to represent the bus in FIG. 11, but this does not mean that there is only one bus or only one type of bus.

The memory 1130 may be configured to store a software program and a module, for example, program instructions/a module corresponding to the image processing method and the training method that are provided in embodiments of this application. The processor 1110 executes the software program and the module that are stored in the memory 1130, to perform various functional applications and data processing. The communications interface 1120 is configured to perform signaling or data communication with another device. In this application, the communications apparatus 1100 may have a plurality of communications interfaces 1120.

The memory may be, but is not limited to, a random access memory (Random Access Memory, RAM), a read-only memory (Read-Only Memory, ROM), a programmable read-only memory (Programmable Read-Only Memory, PROM), an erasable programmable read-only memory (Erasable Programmable Read-Only Memory, EPROM), an electrically erasable programmable read-only memory (Electrically Erasable Programmable Read-Only Memory, EEPROM), and the like.

The processor may be an integrated circuit chip and has a signal processing capability. The processor may be a general-purpose processor, including a central processing unit (Central Processing Unit, CPU), a network processor (Network Processor, NP), and the like; or may be a digital signal processor (Digital Signal Processor, DSP), an application-specific integrated circuit (Application-Specific Integrated Circuit, ASIC), a field-programmable gate array (Field-Programmable Gate Array, FPGA), another programmable logic device, a discrete gate, a transistor logic device, a discrete hardware component, or the like.

The method steps in embodiments of this application may be implemented by hardware, or may be implemented by the processor executing software instructions. The software instructions may be formed by a corresponding software module. The software module may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a communications apparatus or a terminal device. Certainly, the processor and the storage medium may alternatively exist in the communications apparatus or the terminal device as discrete assemblies.

All or some of the foregoing embodiments may be implemented by software, hardware, firmware, or any combination thereof. When the software is used to implement embodiments, all or a part of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a communications apparatus, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1. An image processing method, applied to a sending node, wherein the method comprises:

   obtaining a to-be-processed image;
   performing feature extraction on the to-be-processed image by using a feature extraction layer comprised in a convolutional neural network, to obtain a first feature map;
   compressing the first feature map by using a feature compression layer comprised in the convolutional neural network, to obtain a second feature map, wherein a channel quantity of the second feature map is less than a channel quantity of the first feature map; and
   sending the second feature map to a receiving node.

2. The method according to claim 1, wherein the feature compression layer comprises at least one convolutional layer.

3. The method according to claim 1 or 2, wherein a resolution of the first feature map is $W \times H$, a resolu-

tion of the second feature map is W'×H', and W'×H'<W×H.

4. The method according to any one of claims 1 to 3, wherein the method further comprises:
receiving an image processing result of the to-be-processed image, wherein the image processing result is determined by the receiving node based on the second feature map.

5. The method according to claim 4, wherein the method further comprises:
displaying the image processing result.

6. An image processing method, applied to a receiving node, wherein the method comprises:

receiving a second feature map, wherein the second feature map is obtained after a sending node performs feature extraction on a to-be-processed image by using a convolutional neural network, to obtain a first feature map, and compresses the first feature map;
reconstructing the second feature map by using a feature reconstruction layer comprised in the convolutional neural network, to obtain a third feature map, wherein a channel quantity of the second feature map is less than a channel quantity of the third feature map, and a channel quantity of the first feature map is the same as the channel quantity of the third feature map;
processing the third feature map by using a feature output layer and an image processing layer that are comprised in the convolutional neural network, to obtain an image processing result, wherein the image processing result indicates information about the to-be-processed image; and
sending the image processing result.

7. The method according to claim 6, wherein the feature reconstruction layer comprises at least one deconvolution layer.

8. The method according to claim 6 or 7, wherein a resolution of the second feature map is W'×H', a resolution of the third feature map is W×H, and W'×H'<W×H.

9. The method according to any one of claims 6 to 8, wherein the receiving a second feature map comprises:

receiving the second feature map sent by the sending node; and
the sending the image processing result comprises:
sending the image processing result to the sending node.

10. A convolutional neural network training method, wherein the method comprises:

obtaining a training set, wherein the training set comprises at least one training image; and
training a first bottleneck structure layer in a first convolutional neural network based on the training set, and a first feature extraction layer and a first feature output layer in the first convolutional neural network, to obtain a second convolutional neural network, wherein the second convolutional neural network comprises the first feature extraction layer, a second bottleneck structure layer, and the first feature output layer, wherein
the first feature extraction layer is used to perform feature extraction on a to-be-processed image, to obtain a first feature map; a feature compression layer in the second bottleneck structure layer is used to compress the first feature map, to obtain a second feature map; and a channel quantity of the second feature map is less than a channel quantity of the first feature map.

11. The method according to claim 10, wherein the training a first bottleneck structure layer in a first convolutional neural network based on the training set, and a first feature extraction layer and a first feature output layer in the first convolutional neural network, to obtain a second convolutional neural network comprises:

inputting the training set into a third convolutional neural network, to obtain a first set, wherein the third convolutional neural network comprises a second feature extraction layer and a second feature output layer, a parameter of the first feature extraction layer is the same as a parameter of the second feature extraction layer, a parameter of the first feature output layer is the same as a parameter of the second feature output layer, the first set comprises a fourth feature map, and the fourth feature map is obtained after the second feature extraction layer and the second feature output layer are used to perform feature extraction on the training image;
inputting the training set into the first convolutional neural network, to obtain a second set, wherein the second set comprises a fifth feature map, and the fifth feature map is obtained after the first bottleneck structure layer and the first feature output layer are used to perform feature reconstruction and processing on the second feature map;
calculating a loss function based on the fourth feature map in the first set and the fifth feature map in the second set; and

updating a parameter of the first bottleneck structure layer according to the loss function, to obtain the second bottleneck structure layer and obtain the second convolutional neural network.

12. The method according to claim 11, wherein the inputting the training set into the first convolutional neural network, to obtain a second set comprises:

performing feature extraction on the training image by using the first feature extraction layer, to obtain the first feature map;

compressing the first feature map by using a feature compression layer comprised in the first bottleneck structure layer, to obtain a sixth feature map, wherein a channel quantity of the sixth feature map is less than the channel quantity of the first feature map;

reconstructing the sixth feature map by using a feature reconstruction layer comprised in the first bottleneck structure layer, to obtain a third feature map, wherein a channel quantity of the third feature map is the same as the channel quantity of the first feature map; and

processing the third feature map by using the second feature output layer, to obtain the fifth feature map comprised in the second set.

13. The method according to claim 12, wherein the calculating a loss function based on the fourth feature map in the first set and the fifth feature map in the second set comprises:

obtaining a first distance between the fourth feature map and the fifth feature map;

obtaining a second distance between the first feature map and the third feature map; and

calculating the loss function based on the first distance and the second distance.

14. The method according to any one of claims 10 to 13, wherein a resolution of the first feature map is W×H, a resolution of the second feature map is W'×H', and W'×H'<W×H.

15. An image processing apparatus, applied to a sending node, wherein the apparatus comprises:

a transceiver unit, configured to obtain a to-be-processed image;

a feature extraction unit, configured to perform feature extraction on the to-be-processed image by using a feature extraction layer comprised in a convolutional neural network, to obtain a first feature map; and

a feature compression unit, configured to compress the first feature map by using a feature compression layer comprised in the convolutional neural network, to obtain a second feature map, wherein a channel quantity of the second feature map is less than a channel quantity of the first feature map, wherein

the transceiver unit is further configured to send the second feature map to a receiving node.

16. The apparatus according to claim 15, wherein the feature compression layer comprises at least one convolutional layer.

17. The apparatus according to claim 15 or 16, wherein a resolution of the first feature map is W×H, a resolution of the second feature map is W'×H', and W'×H'<W×H.

18. The apparatus according to any one of claims 15 to 17, wherein the transceiver unit is further configured to receive an image processing result of the to-be-processed image, wherein the image processing result is determined by the receiving node based on the second feature map.

19. The apparatus according to claim 18, wherein the apparatus further comprises:
a display unit, configured to display the image processing result.

20. An image processing apparatus, applied to a receiving node, wherein the apparatus comprises:

a transceiver unit, configured to receive a second feature map, wherein the second feature map is obtained after a sending node performs feature extraction on a to-be-processed image by using a convolutional neural network, to obtain a first feature map, and compresses the first feature map;

a feature reconstruction unit, configured to reconstruct the second feature map by using a feature reconstruction layer comprised in the convolutional neural network, to obtain a third feature map, wherein a channel quantity of the second feature map is less than a channel quantity of the third feature map, and a channel quantity of the first feature map is the same as the channel quantity of the third feature map; and

an image processing unit, configured to process the third feature map by using a feature output layer and an image processing layer that are comprised in the convolutional neural network, to obtain an image processing result, wherein the image processing result indicates information about the to-be-processed image, wherein the transceiver unit is configured to send the image processing result.

21. The apparatus according to claim 20, wherein the feature reconstruction layer comprises at least one deconvolution layer.

22. The apparatus according to claim 20 or 21, wherein a resolution of the second feature map is W'×H', a resolution of the third feature map is W×H, and W'×H<W×H.

23. The apparatus according to any one of claims 20 to 22, wherein the transceiver unit is specifically configured to receive the second feature map sent by the sending node; and

the transceiver unit is specifically configured to send the image processing result to the sending node.

24. A convolutional neural network training apparatus, wherein the apparatus comprises:

an obtaining unit, configured to obtain a training set, wherein the training set comprises at least one training image; and

a processing unit, configured to train a first bottleneck structure layer in a first convolutional neural network based on the training set, and a first feature extraction layer and a first feature output layer in the first convolutional neural network, to obtain a second convolutional neural network, wherein the second convolutional neural network comprises the first feature extraction layer, a second bottleneck structure layer, and the first feature output layer, wherein

the first feature extraction layer is used to perform feature extraction on a to-be-processed image, to obtain a first feature map; a feature compression layer in the second bottleneck structure layer is used to compress the first feature map, to obtain a second feature map; and a channel quantity of the second feature map is less than a channel quantity of the first feature map.

25. The apparatus according to claim 24, wherein the processing unit comprises:

a first training unit, configured to input the training set into a third convolutional neural network, to obtain a first set, wherein the third convolutional neural network comprises a second feature extraction layer and a second feature output layer, a parameter of the first feature extraction layer is the same as a parameter of the second feature extraction layer, a parameter of the first feature output layer is the same as a parameter of the second feature output layer, the first set comprises a fourth feature map, and the fourth feature map is obtained after the second feature extraction layer and the second feature output layer are used to perform feature extraction on the training image;

a second training unit, configured to input the training set into the first convolutional neural network, to obtain a second set, wherein the second set comprises a fifth feature map, and the fifth feature map is obtained after the first bottleneck structure layer and the first feature output layer are used to perform feature reconstruction and processing on the second feature map;

a loss calculation unit, configured to calculate a loss function based on the fourth feature map in the first set and the fifth feature map in the second set; and

a third training unit, configured to update a parameter of the first bottleneck structure layer according to the loss function, to obtain the second bottleneck structure layer and obtain the second convolutional neural network.

26. The apparatus according to claim 25, wherein the first bottleneck structure layer comprises a feature compression layer and a feature reconstruction layer; and

the inputting the training set into the first convolutional neural network to obtain a second set comprises:

performing feature extraction on the training image by using the first feature extraction layer, to obtain the first feature map;

compressing the first feature map by using a feature compression layer comprised in the first bottleneck structure layer, to obtain a sixth feature map, wherein a channel quantity of the sixth feature map is less than the channel quantity of the first feature map;

reconstructing the sixth feature map by using a feature reconstruction layer comprised in the first bottleneck structure layer, to obtain a third feature map, wherein a channel quantity of the third feature map is the same as the channel quantity of the first feature map; and

processing the third feature map by using the second feature output layer, to obtain the fifth feature map comprised in the second set.

27. The apparatus according to claim 26, wherein the loss calculation unit is specifically configured to obtain a first distance between the fourth feature map and the fifth feature map;

the loss calculation unit is specifically configured to obtain a second distance between the first feature map and the third feature map; and

the loss calculation unit is specifically configured to calculate the loss function based on the first distance and the second distance.

**28.** The apparatus according to any one of claims 24 to 27, wherein a resolution of the first feature map is W×H, a resolution of the second feature map is W'×H', and W'×H'<W×H.

**29.** A communications apparatus, comprising a processor and an interface circuit, wherein the interface circuit is configured to: receive a signal from a communications apparatus other than the communications apparatus and transmit the signal to the processor, or send a signal from the processor to a communications apparatus other than the communications apparatus, and the processor is configured to implement the method according to any one of claims 1 to 9 or the method according to any one of claims 10 to 14 by using a logic circuit or by executing code instructions.

**30.** A computer-readable storage medium, wherein the storage medium stores a computer program or instructions; and when the computer program or the instructions are executed by a communications apparatus, the method according to any one of claims 1 to 9 or the method according to any one of claims 10 to 14 is implemented.

FIG. 1

Sending node

Receiving node

S210: Obtain a to-be-processed image

S220: Perform feature extraction on the to-be-processed image by using a feature extraction layer included in a convolutional neural network, to obtain a first feature map

S230: Compress the first feature map by using a feature compression layer included in the convolutional neural network, to obtain a second feature map

S240: Send the second feature map

S250: Reconstruct the second feature map by using a feature reconstruction layer included in the convolutional neural network, to obtain a third feature map

S260: Process the second feature map by using a feature output layer and an image processing layer that are included in the convolutional neural network, to obtain an image processing result

Optional

S270: Send the image processing result

S280: Display the image processing result

FIG. 2

FIG. 3

FIG. 4

To-be-processed image

Image processing result

Water cup

Pen

To-be-processed image +
Image processing result

Water cup

Pen

(a)

(b)

(c)

FIG. 5

S610: Obtain a training set

S620: Train a first bottleneck structure layer of a first convolutional neural network based on the training set, and a first feature extraction layer and a first feature output layer of the first convolutional neural network, to obtain a second convolutional neural network

FIG. 6

First convolutional neural network 710

First bottleneck structure layer 711

Training image → First feature extraction layer T701 → Feature compression layer 7111 → Feature reconstruction layer 7112 → First feature output layer P701 →

First feature map FM1

Second feature map FM2

Third feature map FM3

Second convolutional neural network 720

Second bottleneck structure layer 721

Training image → First feature extraction layer T701 → Feature compression layer 7211 → Feature reconstruction layer 7212 → First feature output layer P701 →

First feature map FM1

Second feature map FM2`

Third feature map FM3`

FIG. 7

**Third convolutional neural network 730**

Training image → | Second feature extraction layer T702 | → | Second feature output layer P702 | →

First feature map FM1

First set

| Second feature extraction layer T702 | | Second feature output layer P702 |

Training image → | Network layer conv1 | → | Network layer conv2 | | Network layer conv3 | → | Network layer conv4 | → | Network layer conv5 | ⇢

First feature map FM1

Fourth feature map FM4_1

Fourth feature map FM4_2

Fourth feature map FM4_3

FIG. 8A

FIG. 8B

```
┌─────────────────────────────────────┐
│     S610: Obtain a training set      │
└─────────────────────────────────────┘
                    │
                    ▼
┌ ─ ─ ─ ─ ─ ─ ─ ─ ─ ─ ─ ─ ─ ─ ─ ─ ─ ─ ┐
│  S620                                 │
│ ┌───────────────────────────────────┐ │
│ │ S621: Input the training set into  │ │
│ │ a third convolutional neural       │ │
│ │ network, to obtain a first set     │ │
│ └───────────────────────────────────┘ │
│                  │                     │
│                  ▼                     │
│ ┌───────────────────────────────────┐ │
│ │ S622: Input the training set into  │ │
│ │ a first convolutional neural       │ │
│ │ network, to obtain a second set    │ │
│ └───────────────────────────────────┘ │
│                  │                     │
│                  ▼                     │
│ ┌───────────────────────────────────┐ │
│ │ S623: Calculate a loss function    │ │
│ │ based on a fourth feature map in   │ │
│ │ the first set and a fifth feature  │ │
│ │ map in the second set              │ │
│ └───────────────────────────────────┘ │
│                  │                     │
│                  ▼                     │
│ ┌───────────────────────────────────┐ │
│ │ S624: Update a parameter of the    │ │
│ │ first bottleneck structure layer   │ │
│ │ according to the loss function, to │ │
│ │ obtain a second bottleneck         │ │
│ │ structure layer and obtain a       │ │
│ │ second convolutional neural        │ │
│ │ network                            │ │
│ └───────────────────────────────────┘ │
└ ─ ─ ─ ─ ─ ─ ─ ─ ─ ─ ─ ─ ─ ─ ─ ─ ─ ─ ┘
```

**S622**                                                    **Optional**

S622a: Perform feature extraction on a training image by using a first feature extraction layer, to obtain a first feature map

S622b: Compress the first feature map by using a feature compression layer included in a first bottleneck structure layer, to obtain a sixth feature map

S623c: Reconstruct the sixth feature map by using a feature reconstruction layer included in the first bottleneck structure layer, to obtain a third feature map

S624d: Process the third feature map by using a second feature output layer, to obtain a fifth feature map included in the second set

**S623**                                                    **Optional**

S623a: Obtain a first distance between the fourth feature map and the fifth feature map

S623b: Obtain a second distance between the first feature map and the third feature map

S623c: Calculate a loss function based on the first distance and the second distance

FIG. 9

Training set

Training apparatus 1010

Obtaining unit 1011

Processing unit 1012

First training unit 1012a

Second training unit 1012b

Loss calculation unit 1012c

Third training unit 1012d

Second convolutional neural network

To-be-processed image

First image processing apparatus 1020

Feature extraction unit 1022

First transceiver unit 1021

Feature compression unit 1023

Display unit 1024

Second image processing apparatus 1030

Feature reconstruction unit 1032

Second transceiver unit 1031

Image processing unit 1033

FIG. 10

Communications apparatus 1100

1120

Communications interface

1110

Processor

1140

1130

Memory

FIG. 11

## INTERNATIONAL SEARCH REPORT

| International application No. |
| --- |
| **PCT/CN2022/083614** |

### A. CLASSIFICATION OF SUBJECT MATTER

G06T 9/00(2006.01)i

According to International Patent Classification (IPC) or to both national classification and IPC

### B. FIELDS SEARCHED

Minimum documentation searched (classification system followed by classification symbols)

G06T 9/00

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI; 卷积, 反卷积, 压缩, 通道, 升维, 降维, 瓶颈结构, 重建, 发送, 接收, convolution, deconvolution, compress, bottleneck, rebuild, send, receive

### C. DOCUMENTS CONSIDERED TO BE RELEVANT

| Category* | Citation of document, with indication, where appropriate, of the relevant passages | Relevant to claim No. |
| --- | --- | --- |
| X | CN 111340901 A (STATE GRID ZHEJIANG ELECTRIC POWER CO., LTD. et al.) 26 June 2020 (2020-06-26) <br> description, paragraphs [0025]-[0074] | 1-9, 15-23, 29-30 |
| A | EP 3660785 A1 (LARALAB UG) 03 June 2020 (2020-06-03) <br> entire document | 1-30 |
| A | CN 112203098 A (GUANGDONG TUS-TUWEI TECHNOLOGY CO., LTD.) 08 January 2021 (2021-01-08) <br> entire document | 1-30 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 May 2022** | **10 June 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/083614**

| Patent document cited in search report | | | Publication date (day/month/year) | Patent family member(s) | | | Publication date (day/month/year) |
|---|---|---|---|---|---|---|---|
| CN | 111340901 | A | 26 June 2020 | None | | | |
| EP | 3660785 | A1 | 03 June 2020 | US | 2022028085 | A1 | 27 January 2022 |
| | | | | EP | 3888052 | A1 | 06 October 2021 |
| | | | | WO | 2020109630 | A1 | 04 June 2020 |
| CN | 112203098 | A | 08 January 2021 | CN | 112203098 | B | 01 June 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2021109673